# EUROPÄISCHE PATENTSCHRIFT

(11) **EP 3 059 480 B1**
(45) Veröffentlichungstag und Bekanntmachung des Hinweises auf die Patenterteilung: **06.06.2018**
(21) Anmeldenummer: 16151868.3
(22) Anmeldetag: 14.07.2009
(51) Int. Cl.: F16K 31/08, G01F 11/32, H01F 7/16

(54) **DOSIERGERÄT**
METERING DEVICE
APPAREIL DE DOSAGE

(30) Priorität: 15.07.2008 DE 102008033102
(43) Veröffentlichungstag der Anmeldung: 24.08.2016
(62) Teilanmeldung aus: 09780549.3
(73) Patentinhaber: Henkel AG & Co. KGaA, 40589 Düsseldorf (DE)
(72) Erfinder: KESSLER, Arnd, 40789 Monheim am Rhein (DE); FILECCIA, Salvatore, 46049 Oberhausen (DE); MÜHLHAUSEN, Hans-Georg, 40597 Düsseldorf (DE); EICHHOLZ, Heinz-Dieter, 58642 Iserlohn (DE); SCHMALZ, Roland, 88289 Waldburg (DE); NGUYEN, Ba Loc, 88099 Neukirch (DE)

(56) Entgegenhaltungen:
- EP-A1- 0 572 155
- EP-A1- 0 685 671
- EP-A1- 1 329 188
- EP-A1- 1 482 225
- DE-A1- 10 324 091
- DE-A1-102006 043 919
- GB-A- 2 022 783
- US-A- 3 728 654
- US-A- 4 127 835
- US-A1- 2002 088 502

## Beschreibung

Die Erfindung betrifft ein Dosiergerät und Dosiersystem für die Abgabe einer Mehrzahl von Zubereitungen zur Anwendung in wasserführenden Geräten, insbesondere wasserführenden Haushaltsgeräten wie beispielsweise Geschirrspülmaschinen, Waschmaschinen, Wäschetrocknern oder automatischen Oberflächenreinigungssystemen.

### Stand der Technik

Geschirrspülmittel stehen dem Verbraucher in einer Vielzahl von Angebotsformen zur Verfügung. Neben den traditionellen flüssigen Handgeschirrspülmitteln haben mit der Verbreitung von Haushaltsgeschirrspülmaschinen insbesondere die maschinellen Geschirrspülmittel eine große Bedeutung. Diese maschinellen Geschirrspülmittel werden dem Verbraucher typischerweise in fester Form, beispielsweise als Pulver oder als Tabletten, zunehmend jedoch auch in flüssiger Form angeboten. Ein Hauptaugenmerk liegt dabei seit geraumer Zeit auf der bequemen Dosierung von Wasch- und Reinigungsmitteln und der Vereinfachung der zur Durchführung eines Wasch- oder Reinigungsverfahrens notwendigen Arbeitsschritte.

Ferner ist eines der Hauptziele der Hersteller maschineller Reinigungsmittel die Verbesserung der Reinigungsleistung dieser Mittel, wobei in jüngster Zeit ein verstärktes Augenmerk auf die Reinigungsleistung bei Niedrigtemperatur-Reinigungsgängen bzw. in Reinigungsgängen mit verringertem Wasserverbrauch gelegt wird. Hierzu wurden den Reinigungsmitteln vorzugsweise neue Inhaltsstoffe, beispielsweise wirksamere Tenside, Polymere, Enzyme oder Bleichmittel zugesetzt. Da neue Inhaltsstoffe jedoch nur in begrenztem Umfang zur Verfügung stehen und die pro Reinigungsgang eingesetzte Menge der Inhaltsstoffe aus ökologischen und wirtschaftlichen Gründen nicht in beliebigem Maße erhöht werden kann, sind diesem Lösungsansatz natürliche Grenzen gesetzt.

In diesem Zusammenhang sind in jüngster Zeit insbesondere Vorrichtungen zur Mehrfachdosierung von Wasch- und Reinigungsmitteln in das Blickfeld der Produktentwickler geraten. Bei diesen Vorrichtungen kann zwischen in die Geschirrspülmaschine oder Textilwaschmaschine integrierten Dosierkammern einerseits und eigenständigen, von der Geschirrspülmaschine oder Textilwaschmaschine unabhängigen Vorrichtungen andererseits unterschieden werden. Mittels dieser Vorrichtungen, welche die mehrfache der für die Durchführung eines Reinigungsverfahrens notwendigen Reinigungsmittelmenge enthalten, werden Wasch- oder Reinigungsmittelportionen in automatischer oder halbautomatischer Weise im Verlauf mehrerer aufeinander folgender Reinigungsverfahren in den Innenraum der Reinigungsmaschine dosiert. Für den Verbraucher entfällt die Notwendigkeit der manuellen Dosierung bei jedem Reinigungs- bzw. Waschgang. Beispiele für derartige Vorrichtungen werden in der europäischen Patentanmeldung EP 1 759 624 A2 (Reckitt Benckiser) oder in der deutschen Patentanmeldung DE 53 5005 062 479 A1 (BSH Bosch und Siemens Hausgeräte GmbH) beschrieben. Ein anderes Beispiel eines Dosiersystems zur Abgabe einer Reinigungsmittelzubereitung ins Innere einer Geschirrspülmaschine nach dem Stand der Technik wird in US 2002/0088502 A1 offenbart.

Soll ein autarkes, elektrisch betriebenes Dosiergerät beispielsweise über eine nicht wideraufladbare Batterie mit Energie versorgt werden, sollte der Energieverbrauch der Steuerung und Aktuatorik möglichst gering sein um eine lange Funktionsdauer des Dosiergeräts zu gewährleisten und die Kapazität bzw. Größe der notwendigen Batterie möglichst gering zu halten.

### Aufgabe der Erfindung

Die Aufgabe der Erfindung besteht darin, eine Aktuatorik mit einem möglichst geringen Verbrauch für ein elektrisch betriebenes Dosiersystem bereitzustellen.

Diese Aufgabe wird durch ein Dosiergerät mit den Merkmalen des Anspruchs 1 gelöst.

Einwesentlicher Vorteil der Erfindung ist es, dass nur für den eigentlichen Schaltvorgang Energie in Form eines Impulses benötigt wird.

Das erfindungsgemäße Dosiersystem besteht aus den Grundbauelementen einer mit Zubereitung befüllten Kartusche und einem mit der Kartusche kuppelbarem Dosiergerät, welches wiederum aus weiteren Baugruppen, wie beispielsweise Bauelementträger, Aktuator, Verschlusselement, Sensor, Energiequelle und/oder Steuereinheit, gebildet ist.

Es ist bevorzugt, dass das erfindungsgemäße Dosiersystem beweglich ist. Beweglich im Sinne dieser Anmeldung bedeutet, dass das Dosiersystem nicht unlösbar mit einer wasserführenden Vorrichtung wie beispielsweise einer Geschirrspülmaschine, Waschmaschine, Wäschtrockner oder dergleichen verbunden ist, sondern beispielsweise aus einer Geschirrspülmaschine durch den Benutzer entnehmbar oder in einer Geschirrspülmaschine positionierbar, also eigenständig handhabbar, ist

Gemäß einer alternativen Ausgestaltung der Erfindung ist es auch denkbar, dass das Dosiergerät für den Benutzer nicht lösbar mit einer wasserführenden Vorrichtung wie beispielsweise einer Geschirrspülmaschine, Waschmaschine, Wäschtrockner oder dergleichen verbunden ist und lediglich die Kartusche beweglich ist.

Um den Betrieb bei erhöhten Temperaturen, wie sie beispielsweise in einzelnen Waschzyklen einer Geschirrspülmaschine auftreten, zu gewährleisten, kann das Dosiersystem aus Materialen geformt sein, die bis zu einer Temperatur von 120°C formstabil sind.

Da die zu dosierenden Zubereitungen je nach beabsichtigtem Verwendungszweck einen pH-Wert zwischen 2 und 12 aufweisen können, sollten alle Komponenten des Dosiersystems, die in Kontakt mit den Zubereitungen kommen, eine entsprechende Säure- und/oder Alkaliresistenz aufweisen. Ferner sollten die diese Komponenten durch eine geeignete Materialauswahl weitestgehend chemisch inert, beispielsweise gegen nichtionische Tenside, Enzyme und/oder Duftstoffe sein.

### Kartusche

Unter einer Kartusche im Sinne dieser Anmeldung wird ein Packmittel verstanden, das dazu geeignet ist wenigstens eine fließfähige, schüttfähige oder streufähige Zubereitungen zu umhüllen oder zusammenzuhalten und das zur Abgabe wenigstens einer Zubereitung an ein Dosiergerät koppelbar ist.

In der einfachsten, denkbaren Ausführung weist die Kartusche eine, bevorzugt formstabile Kammer zur Bevorratung einer Zubereitung auf. Insbesondere kann eine Kartusche auch mehrere Kammern umfassen, die mit voneinander verschiedenen Zusammensetzungen befüllbar sind.

Es ist vorteilhaft, dass die Kartusche wenigstens eine Auslassöffnung aufweist, die derart angeordnet ist, dass eine schwerkraftbewirkte Zubereitungsfreisetzung aus der Kartusche in der Gebrauchsstellung des Dosiergeräts bewirkt werden kann. Hierdurch werden keine weiteren Fördermittel zur Freisetzung von Zubereitung aus der Kartusche benötigt, wodurch der Aufbau des Dosiergeräts einfach und die Herstellungskosten niedrig gehalten werden können. Des Weiteren kann die Verwendung von Fördermitteln, wie z.B. Pumpen entfallen, wodurch die Lebensdauer einer Batterie oder Akkus des Dosiergeräts gesteigert werden kann.

In einer bevorzugten Ausgestaltungsform der Erfindung ist wenigstens eine zweite Kammer zur Aufnahme wenigstens einer zweiten fließ- oder streufähigen Zubereitung vorgesehen, wobei die zweite Kammer wenigstens eine Auslassöffnung aufweist, die derart angeordnet ist, dass eine schwerkraftbewirkte Produktfreisetzung aus der zweiten Kammer in der Gebrauchsstellung des Dosiergeräts bewirkbar ist. Die Anordnung einer zweiten Kammer ist insbesondere dann vorteilhaft, wenn in den voneinander getrennten Kammern der Kartusche Zubereitungen bevorratet sind, die üblicherweise nicht miteinander lagerstabil sind, wie beispielsweise Bleichmittel und Enzyme.

Des Weiteren ist es vorstellbar, dass mehr als zwei, insbesondere drei bis vier Kammern in bzw. an einer Kartusche vorgesehen sind. Insbesondere kann einer der Kammern zur Abgabe von flüchtigen Zubereitungen wie etwa eines Duftstoffs an die Umgebung ausgestaltet sein.

Insbesondere kann die Kartusche auch asymmetrisch ausgebildet sein. Besonders bevorzugt ist es die Asymmetrie der Kartusche derart auszuformen, dass die Kartusche nur in einer vordefinierten Position in mit dem Dosiergerät koppelbar ist, wodurch eine sonst mögliche Fehlbedienung durch den Benutzer verhindert wird.

Die Kartusche kann jede beliebige Raumform annehmen. Sie kann beispielsweise würfelartig, kugelförmig oder plattenartig ausgebildet sein.

Zur Verwendung des Dosiergeräts in Geschirrspülmaschinen ist es besonders vorteilhaft, das Gerät in Anlehnung an in Geschirrspülmaschinen zu reinigendem Geschirr auszuformen. So kann dieses beispielsweise plattenförmig, in etwa in den Abmessungen eines Tellers, ausgebildet sein. Hierdurch kann das Dosiergerät platzsparend z.B. im Unterkorb des Geschirrspülers positioniert werden. Ferner erschließt sich die richtige Positionierung der Dosiereinheit dem Benutzer unmittelbar intuitiv durch die tellerartige Formgebung.

Bevorzugt weist das Dosiergerät und die Kartusche im miteinander gekoppelten Zustand ein Verhältnis von Höhe:Breite:Tiefe zwischen 5:5:1 und 50:50:1, insbesondere bevorzugt von etwa 10:10:1 auf. Durch die "schlanke" Ausbildung des Dosiergeräts und der Kartusche ist es insbesondere möglich, das Gerät in dem unteren Besteckkorb einer Geschirrspülmaschine in den für Teller vorgesehenen Aufnahmen zu positionieren. Dies hat den Vorteil, dass die aus dem Dosiergerät abgegeben Zubereitungen direkt in die Waschflotte gelangen und nicht an anderem Spülgut anhaften können.

Üblicherweise sind handelsübliche Haushaltsgeschirrspülmaschinen in derart konzipiert, dass die Anordnung von größerem Spülgut, wie etwa Pfannen oder große Teller, im unteren Korb der Geschirrspülmaschine vorgesehen ist. Um eine nicht optimale Positionierung des Dosiersystems bestehend aus dem Dosiergerät und der mit dem Dosiergerät gekoppelten Kartusche durch den Benutzer im oberen Korb zu vermeiden, ist in einer vorteilhaften Ausgestaltung der Erfindung das Dosiersystem derart dimensioniert, dass eine Positionierung des Dosiersystems lediglich in den dafür vorgesehenen Aufnahmen des unteren Korbes ermöglicht ist. Hierzu können die Breite und die Höhe des Dosiersystems insbesondere zwischen 150mm und 300mm, besonders bevorzugt zwischen 175mm und 250mm gewählt sein.

Es ist jedoch auch denkbar, die Dosiereinheit in Becherform oder Topfform mit einer im Wesentlichen kreisrunden oder quadratischen Grundfläche auszubilden.

Die Auslassöffnungen einer Kartusche sind bevorzugt auf einer Linie angeordnet, wodurch eine schlanke, tellerförmige Ausbildung des Dosiergeräts ermöglicht ist.

Die Kartusche ist insbesondere zur Aufnahme von fließfähigen Wasch- oder Reinigungsmittel ausgebildet. Besonders bevorzugt weist eine derartige Kartusche eine Mehrzahl von Kammern zur räumlich separierten Aufnahme jeweils voneinander verschiedener Zubereitungen eines Wasch- oder Reinigungsmittels auf. Exemplarisch - aber nicht abschließend - sind nachfolgend einige Kombinationsmöglichkeiten der Befüllung der Kammern mit unterschiedlichen Zubereitungen aufgelistet:

| | Kammer 1 | Kammer 2 | Kammer 3 | Kammer 4 |
|---|---|---|---|---|
| A | Alkalische Reinigungszubereitung | Enzymatische Reinigungszubereitung | - | - |
| B | Alkalische Reinigungszubereitung | Enzymatische Reinigungszubereitung | Klarspüler | - |
| C | Alkalische Reinigungszubereitung | Enzymatische Reinigungszubereitung | Klarspüler | Duftstoff |
| D | Alkalische Reinigungszubereitung | Enzymatische Reinigungszubereitung | Klarspüler | Desinfektionszubereitung |
| E | Alkalische Reinigungszubereitung | Enzymatische Reinigungszubereitung | Klarspüler | Vorbehandlungszubereitung |

Es ist besonders bevorzugt, dass alle Zubereitungen fließfähig sind, da hierdurch ein schnelles Lösen der Zubereitungen in der Waschflotte des Geschirrspülers gewährleistet ist, wodurch diese Zubereitungen eine rasche bis sofortige Reinigungs- bzw. Klarspülwirkung, insbesondere auch auf den Wänden des Spülraums und/oder eines Lichtleiters der Kartusche und/oder des Dosiergeräts erzielen.

Die Kartusche weist üblicherweise ein Gesamtfüllvolumen von <5.000 ml, insbesondere <1.000 ml, bevorzugt <500ml, besonders bevorzugt <250 ml, ganz besonders bevorzugt < 50 ml auf.

Die Kammern einer Kartusche können gleiche oder voneinander verschiedene Füllvolumina aufweisen. Bei einer Konfiguration mit zwei Kammern beträgt das Verhältnis der Kammervolumina bevorzugt 5:1, bei einer Konfiguration mit drei Kammern bevorzugt 4:1:1, wobei diese Konfigurationen insbesondere zur Verwendung in Geschirrspülmaschinen geeignet sind.

Wie oben erwähnt, besitzt die Kartusche vorzugsweise drei Kammern. Für den Einsatz einer derartigen Kartusche in einer Geschirrspülmaschine ist es insbesondere bevorzugt, dass eine Kammer eine alkalische Reinigungszubereitung, eine weitere Kammer eine enzymatische Zubereitung und eine dritte Kammer einen Klarspüler beinhaltet, wobei das Volumenverhältnis der Kammern in etwa 4:1:1 beträgt.

Die die alkalische Reinigungszubereitung beinhaltende Kammer weist bevorzugt das größte Füllvolumen der vorhandenen Kammern auf. Bevorzugt weisen die Kammern, die eine enzymatische Zubereitung bzw. einen Klarspüler bevorraten, in etwa gleiche Füllvolumina auf.

Bei einer Zwei- und/oder Drei-Kammerausführung der Kartusche ist insbesondere möglich, insbesondere eine Duftstoff-, Desinfektions- und/oder Vorbehandlungszubereitung in einer lösbar an der Kartusche oder am Dosiergerät angeordneten, weiteren Kammer zu bevorraten.

Die Kartusche umfasst einen Kartuschenboden, der in Gebrauchsstellung in Schwerkraftrichtung nach unten gerichtet ist und an dem bevorzugt für jede Kammer mindestens eine in Schwerkraftrichtung bodenseitig angeordnete Auslassöffnung vorgesehen ist. Die bodenseitig angeordneten Auslassöffnungen sind insbesondere derart ausgebildet, dass wenigstens eine, bevorzugt alle Auslassöffnungen mit den Einlassöffnungen des Dosiergeräts kommunizierend verbindbar sind, also Zubereitung über die Auslassöffnungen aus der Kartusche in das Dosiergerät, bevorzugt schwerkraftbewirkt, einfließen kann.

Es ist auch denkbar, dass eine oder mehrere Kammern eine nicht in Schwerkraftrichtung bodenseitig angeordnete Auslassöffnung aufweisen. Dies ist insbesondere dann von Vorteil, wenn zum Beispiel ein Duftstoff an die Umgebung der Kartusche abgegeben werden soll.

Bevorzugt ist die Kartusche aus wenigstens zwei miteinander stoffschlüssig verbundenen Elementen gebildet, wobei die Verbindungskante der Elemente am Kartuschenboden außerhalb der Auslassöffnungen verläuft, die Verbindungskante die Auslassöffnungen also nicht schneidet. Dies ist insbesondere von Vorteil, da hierdurch Dichtigkeitsprobleme bei der Kopplung mit dem Dosiergerät im Bereich der Auslassöffnungen vermieden werden, die insbesondere bei den in einem Geschirrspüler üblicherweise vorkommenden hohen Temperaturwechselbeanspruchungen vorkommen.

In einer weiteren Ausgestaltung der Erfindung ist eine Energiequelle, insbesondere eine Batterie oder Akkumulator, an oder in der Kartusche, bevorzugt am oder im Boden der Kartusche, angeordnet. An der Kartusche können des weiteren Mittel zur elektrischen Kopplung der Energiequelle mit dem Dosiergerät vorgesehen sein.

### Dosiergerät

In dem Dosiergerät sind die zum Betrieb notwendige Steuereinheit sowie wenigstens ein Aktuator integriert. Bevorzugt ist ebenfalls eine Sensoreinheit und/oder eine Energiequelle an oder in dem Dosiergerät angeordnet.

Vorzugsweise besteht das Dosiergerät aus einem spritzwassergeschütztem Gehäuse, dass das Eindringen von Spritzwasser, wie es beispielsweise bei der Verwendung in einer Geschirrspülmaschine auftreten kann, in das Innere des Dosiergeräts, indem zumindest die Steuereinheit, Sensoreinheit und/oder Aktuator angeordnet sind, verhindert.

Besonders vorteilhaft ist es, insbesondere die Energiequelle, die Steuereinheit sowie die Sensoreinheit derart zu vergießen, dass das Dosiergerät im Wesentlichen wasserdicht, das Dosiergerät also auch bei vollständigem Umschluss mit Flüssigkeit funktionsfähig ist. Als Vergussmaterialien können beispielsweise mehrkomponentige Epoxyd-, und Acrylat-Vergußmassen wie Methacrylatester, Urethan-Metha und Cyanacrylate oder Zweikomponenten-Materialien mit Polyurethanen, Silikonen, Epoxydharzen verwendet werden.

Eine Alternative oder Ergänzung zum Vergießen stellt das Verkapseln der Bauteile in einem entsprechend ausgestalteten, feuchtigkeitsdichten Gehäuse dar. Eine derartige Ausgestaltung wird an nachfolgender Stelle noch näher erläutert.

Des Weiteren ist es vorteilhaft, die Bauelemente bzw. Baugruppen auf, an und/oder in einem Bauelementträger im Dosiergerät anzuordnen, auch dies wird an andere Stelle noch erläutert.

Es ist besonders bevorzugt, dass das Dosiergerät wenigstens eine erste Schnittstelle umfasst, welche in oder an einem Haushaltsgerät, insbesondere einem wasserführendem Haushaltsgerät, bevorzugt eine Geschirrspül- oder Waschmaschine ausgebildeten korrespondierenden Schnittstelle in derart zusammenwirkt, dass eine Übertragung von elektrischer Energie und/oder Signalen vom Haushaltsgerät zum Dosiergerät und/oder vom Dosiergerät zum Haushaltsgerät verwirklicht ist.

In einer Ausgestaltung der Erfindung sind die Schnittstellen durch Steckverbinder ausgebildet. In einer weiteren Ausgestaltung können die Schnittellen in derart ausgebildet sein, dass eine drahtlose Übertragung von elektrischer Energie und oder elektrischen und/oder optischen Signalen bewirkt ist.

Hierbei ist es insbesondere bevorzugt, dass die zur Übertragung von elektrischer Energie vorgesehene Schnittstellen induktive Sender bzw. Empfänger elektromagnetischer Wellen sind. So kann insbesondere die Schnittstelle eines wasserführenden Geräts, wie etwa einer Geschirrspülmaschine, als eine mit Wechselstrom betriebene Sender-Spule mit Eisenkern und die Schnittstelle des Dosiergeräts als eine Empfänger-Spule mit Eisenkern ausgebildet sein.

In einer alternativen Ausführung kann die Übertragung von elektrischer Energie auch mittels einer Schnittstelle vorgesehen sein, die hauhaltsgeräteseitig eine elektrisch betriebene Lichtquelle und dosiergeräteseitig einen Lichtsensor, beispielsweise eine Photodiode oder eine Solarzelle, umfasst. Das von der Lichtquelle ausgesendete Licht wird vom Lichtsensor in elektrische Energie gewandelt, welche dann wiederum beispielsweise einen dosiergeräteseitigen Akkumulator speist.

In einer vorteilhaften Weiterentwicklung der Erfindung ist eine Schnittstelle am Dosiergerät und dem wasserführenden Gerät, wie etwa einer Geschirrspülmaschine, zur Übertragung (d.h. Senden und Empfangen) von elektromagnetischen und/oder optischen Signalen, welche insbesondere Betriebszustands-, Mess- und/oder Steuerinformationen des Dosiergeräts und/oder des wasserführenden Geräts wie einer Geschirrspülmaschine repräsentieren, ausgebildet.

Selbstverständlich ist es möglich, nur eine Schnittstelle zur Übertragung von Signalen oder eine Schnittstelle zur Übertragung von elektrischer Energie vorzusehen oder jeweils eine Schnittstelle zur Übertragung von Signalen und eine Schnittstelle zur Übertragung von elektrischer Energie vorzusehen oder eine Schnittstelle vorzusehen, die sowohl geeignet ist, eine Übertragung von elektrischer Energie und Signalen bereitzustellen.

Insbesondere kann eine derartige Schnittstelle derart ausgebildet sein, dass eine drahtlose Übertragung von elektrischer Energie und/oder elektromagnetischen und/oder optischen Signalen bewirkt ist.

Es ist besonders bevorzugt, dass die Schnittstelle zum Aussenden und/oder Empfang von optischen Signalen konfiguriert ist. Ganz besonders bevorzugt ist es, dass die Schnittstelle zum Aussenden bzw. Empfang von Licht im sichtbaren Bereich konfiguriert ist. Da üblicherweise im Betrieb einer Geschirrspülmaschine im Inneren des Spülraums Dunkelheit vorherrscht, können Signale im sichtbaren, optischen Bereich, beispielsweise in Form von Signalimpulsen bzw. Lichtblitzen, vom Dosiergerät ausgesendet und/oder detektiert werden. Als besonders vorteilhaft hat sich herausgestellt, Wellenlängen zwischen 600-800nm im sichtbaren Spektrum zu verwenden.

Alternativ oder zusätzlich ist es vorteilhaft, dass die Schnittstelle zum Aussenden bzw. Empfang von Infrarotsignalen konfiguriert ist. Insbesondere ist es von Vorteil, dass die Schnittstelle zum Aussenden bzw. Empfang von Infrarotsignalen im nahen Infrarotbereich (780nm-3.000nm) konfiguriert ist.

Insbesondere umfasst die Schnittstelle wenigstens eine LED. Besonders bevorzugt umfasst die Schnittstelle wenigstens zwei LEDs. Auch ist es gemäß einer weiter zu bevorzugenden Ausgestaltung der Erfindung möglich, wenigstens zwei LEDs vorzusehen, die Licht in einer voneinander verschiedenen Wellenlänge aussenden. Hierdurch wird es beispielsweise möglich, unterschiedliche Signalbänder zu definieren auf denen Informationen gesendet bzw. empfangen werden können.

Es ist insbesondere bevorzugt, dass ein optisches Signal als Signalimpuls mit einer Impulsdauer zwischen 1ms und 10 Sekunden, bevorzugt zwischen 5ms und 100ms Sekunden ausgebildet ist.

Ferner ist es vorteilhaft, dass die Schnittstelle des Dosiergeräts derart konfiguriert ist, dass sie ein optisches Signal bei geschlossener und unbeladener Geschirrspülmaschine aussendet, dass eine mittlere Beleuchtungsstärke E zwischen 0,01 und 100 Lux, bevorzugt zwischen 0,1 und 50 Lux gemessen an den den Spülraum begrenzenden Wänden bewirkt. Diese Beleuchtungsstärke ist dann ausreichend, um Mehrfachreflektionen mit bzw. an den anderen Spülraumwänden zu bewirken und so mögliche Signalschatten im Spülraum, insbesondere im Beladungszustand der Geschirrspülmaschine, zu reduzieren bzw. zu verhindern.

Bei dem von der Schnittstelle ausgesendete und/oder empfangene Signal handelt es sich insbesondere um einen Träger von Information, insbesondere um ein Steuersignal oder ein Signal, dass einen Betriebszustand des Dosiergeräts und/oder des Geschirrspülers repräsentiert.

Insbesondere kann die optische Sendeeinheit eine LED sein, welche bevorzugt Licht im sichtbaren und/oder IR-Bereich abstrahlt. Es ist auch denkbar, eine andere geeignete optische Sendeeinheit, wie z.B. eine Laser-Diode, zu verwenden. Besonders zu bevorzugen ist es optische Sendeeinheiten zu verwenden, die Licht im Wellenlängenbereich zwischen 600-800nm aussenden.

In einer vorteilhaften Weiterbildung der Erfindung kann das Dosiergerät wenigstens eine optische Empfangseinheit umfassen. Hierdurch wird es beispielsweise möglich, dass das Dosiergerät Signale von einer im Haushaltsgerät angeordneten optischen Sendeeinheit empfangen kann. Dies kann durch jede geeignete optische Empfangseinheit realisiert sein, wie beispielsweise Photozellen, Photomultiplier, Halbleiterdetektoren, Fotodioden, Fotowiderstände, Solarzellen, Fototransistoren, CCD- und/oder CMOS-Bildsensoren. Besonders bevorzugt ist es, dass die optische Empfangseinheit geeignet ist, Licht im Wellenlängenbereich von 600-800nm zu empfangen.

Die von der Sendeeinheit in die Umgebung des Dosiergeräts ausgesendeten Signale können bevorzugter Weise Informationen bezüglich Betriebszuständen oder Steuerbefehle repräsentieren.

### Dosierkammer

Das Dosiergerät zur Abgabe von wenigstens einer fließfähigen Wasch- und/oder Reinigungsmittelzubereitung ins Innere eines Haushaltsgeräts kann insbesondere eine Dosierkammer aufweisen, die mit dem Dosiergerät koppelbaren Kartusche kommunizierend mit einem im Dosiergerät befindlichen Dosierkammereinlass verbunden ist, so dass in der Gebrauchsstellung des Dosiergeräts Zubereitung schwerkraftbewirkt aus der Kartusche in die Dosierkammer einfließt wobei einen in Schwerkraftrichtung dem Dosierkammereinlass nachfolgenden Dosierkammerauslass angeordnet ist, der durch ein Ventil verschließbar ist wobei in der Dosierkammer ein Schwimmkörper angeordnet ist, dessen Dichte geringer ist als die Dichte der Zubereitung, wobei der Schwimmkörper in der Art ausgebildet ist, dass Zubereitung den Schwimmkörper um- und/oder durchströmen kann und der Schwimmkörper und der Dosierkammereinlass in derart konfiguriert sind, dass der Dosierkammereinlass durch den Schwimmkörper verschließbar ist.

Je nach Konfiguration der Dichte der Zubereitung und der Dichte des Schwimmkörpers und der daraus resultierenden Auftriebskraft, kann der Schwimmkörper den Dosierkammereinlass dichtend oder nicht dichtend verschließen. Bei einem nicht dichtenden Verschluss liegt der Schwimmkörper zwar an dem Dosierkammereinlass an, dichtet diesen aber nicht gegen Zufluss von Zubereitung aus der Kartusche ab, so dass ein Austausch von Zubereitung zwischen der Kartusche und der Dosierkammer möglich ist. Der Schwimmerkörper wirkt in dieser Ausgestaltung der Erfindung als eine gezielte Drossel,
die beim Öffnen des Ventils den Schlupf zwischen Dosierkammereinlauf und Dosierkammerauslass minimiert und damit die Dosiergenauigkeit mitbestimmt.

Alternativ kann der Schwimmkörper und die Dosierkammer als selbstschließendes Ventil ausgebildeten sein, zum einen, um ein möglichst geringer Energieverbrauch in einem energieautarken Dosiergerät zu bewirken; zum anderen wird eine definierte Menge an Zubereitung, die in etwa dem Füllvolumen der Dosierkammer entspricht, freigesetzt.

Besonders vorteilhaft ist es, die Dichte der Wasch- und/oder Reinigungsmittelzubereitung und die Dichte des Schwimmkörpers so zu wählen, dass der Schwimmkörper eine Steiggeschwindigkeit von 1,5 mm/sec bis 25 mm/sec, bevorzugt 2 mm/sec bis 20 mm/sec, insbesondere bevorzugt 2,5 mm/sec bis 17,5 mm/sec in der Wasch- und/oder Reinigungsmittelzubereitung aufweist. Hierdurch wird ein hinreichend rasches Verschließen des Dosierkammereinlasses durch den aufsteigenden Schwimmkörper und somit ein hinreichend kurzes Intervall zwischen zwei Zubereitungsdosierungen gewährleistet.

Die Steiggeschwindigkeit des Schwimmkörpers kann vorteilhafter Weise auch in der das Ventil ansteuernde Steuereinheit des Dosiergeräts gespeichert sein. Hierdurch wird es möglich, das Ventil auch so zu beschalten, dass eine Abgabe von Zubereitung größer als das Volumen der Dosierkammer realisiert ist. Hierbei wird das Ventil dann erneut geöffnet, bevor der Schwimmkörper seine obere Verschlussstellung am Dosierkammereinlass erreicht und den Dosierkammereinlass verschließt.

Um ein genaues Dosieren aus der Dosierkammer in die Umgebung des Dosiergeräts zu gewährleisten hat es sich als vorteilhaft erwiesen, dass der Schwimmkörper und die Dosierkammer in der Art konfiguriert sind, dass in der Abgabestellung des den Dosierkammerauslass zugeordneten Ventils die Steiggeschwindigkeit des Schwimmkörpers in der Wasch- und/oder Reinigungsmittelzubereitung kleiner ist als die Strömgeschwindigkeit der den Schwimmkörper umgebenden Zubereitung aus der Dosierkammer.

Es ist bevorzugt den Schwimmkörper im Wesentlichen kugelförmig auszubilden. Alternativ kann der Schwimmkörper auch im Wesentlichen zylinderförmig sein.

Es ist zu bevorzugen, dass die Dosierkammer im Wesentlichen zylinderförmig ist. Des Weiteren ist es von Vorteil, dass der Durchmesser der Dosierkammer geringfügig größer ist als der Durchmesser des zylinder- oder kugelförmigen Schwimmkörpers, so dass ein Schlupf zwischen Dosierkammer und Schwimmkörper hinsichtlich der Zubereitung entsteht.

Gemäß einer zu bevorzugenden Ausgestaltung, ist der Schwimmkörper aus einem geschäumten, polymeren Material - insbesondere aus geschäumten PP - gebildet.

In einer weiteren, bevorzugten Ausführung ist die Dosierkammer L-förmig ausgeformt.

Ferner kann in der Dosierkammer eine Blende zwischen dem Dosierkammereinlass und Dosierkammerauslass angeordnet sein, wobei die Blendenöffnung derart ausgebildet ist, dass sie durch den Schwimmkörper dichtend oder nicht dichtend verschließbar ist, wobei der Schwimmkörper bevorzugt zwischen der Blende und dem Dosierkammereinlass angeordnet ist.

### Bauelemententräger

Das Dosiergerät umfasst einen Bauelementträger, an dem zumindest der Aktuator und das Verschlusselement sowie die Energiequelle und/oder die Steuereinheit und/oder die Sensoreinheit und/oder die Dosierkammer angeordnet sind.

Der Bauelementträger weist Aufnahmen für die genannten Bauelemente auf und/oder die Bauelemente sind einstückig mit dem Bauelementträger ausgeformt.

Die Aufnahmen für die Bauelemente im Bauelementträger können für eine kraft-, form- und/oder stoffschlüssige Verbindung zwischen einem entsprechenden Bauelement und der korrespondierenden Aufnahme vorgesehen sein.

Ferner ist es denkbar, dass für eine einfache Demontage der Bauelemente vom Bauelementträger, die Dosierkammer, der Aktuator, das Verschlusselement, die Energiequelle, die Steuereinheit und/oder die Sensoreinheit jeweils lösbar am Bauelementträger angeordnet ist.

Auch ist es vorteilhaft, dass die Energiequelle, die Steuereinheit und die Sensoreinheit in einer Baugruppe zusammengefasst am bzw. im Bauelementträger angeordnet sind.
In einer vorteilhaften Weiterentwicklung der Erfindung sind die Energiequelle, die Steuereinheit und die Sensoreinheit in einer Baugruppe zusammengefasst. Dies kann beispielsweise dadurch realisiert sein, dass die Energiequelle, die Steuereinheit und die Sensoreinheit auf einer gemeinsamen elektrischen Leiterplatine angeordnet sind.

Gemäß einer weiteren bevorzugten Ausgestaltung der Erfindung, ist der Bauelementträger wannenartig ausgestaltet, als Spritzgussteil gefertigt. Besonders bevorzugt ist es, dass die Dosierkammer einstückig mit dem Bauelementträger ausgebildet ist.

Durch den Bauelementträger ist eine weitestgehend einfache automatische Bestückung mit den notwendigen Bauelementen des Dosiergeräts möglich. Der Bauelementträger kann so als Ganzes bevorzugt automatisch vorkonfektioniert und zu einem Dosiergerät zusammengefügt werden.

Der wannenartig ausgebildete Bauelementträger kann gemäß einer Ausführungsform der Erfindung nach der Bestückung flüssigkeitsdicht von einem, beispielsweise deckelartigen Verschlusselement verschlossen werden. Das Verschlusselement kann beispielsweise als Folie ausgebildet sein, die flüssigkeitsdicht, stoffschlüssig mit dem Bauelementträger verbunden ist und mit dem wannenartigen Bauelementträger eine oder mehrere flüssigkeitsdichte Kammern ausbildet.

Das Verschlusselement kann auch eine Konsole sein, in die der Bauelementträger einführbar ist, wobei die Konsole und der Bauelementträger im zusammengesetzten Zustand das Dosiergerät ausbilden. Der Bauelementträger und die Konsole wirken im zusammengesetzten Zustand in derart zusammen, dass zwischen mit dem Bauelementträger und der Konsole eine flüssigkeitsdichte Verbindung ausgebildet ist, so dass kein Spülwasser in das Innere des Dosiergeräts bzw. des Bauelementträgers gelangen kann.

Ferner ist bevorzugt, dass in Gebrauchsstellung des Dosiergeräts die Aufnahme für den Aktuator am Bauelementträger in Schwerkraftrichtung oberhalb der Dosierkammer angeordnet ist, wodurch sich eine kompakte Bauform des Dosiergeräts realisieren lässt. Die kompakte Bauweise lässt sich weiter optimieren, indem in Gebrauchsstellung des Dosiergeräts der Dosierkammereinlass am Bauelementträger oberhalb der Aufnahme des Aktuators angeordnet ist. Auch ist es zu bevorzugen, dass die Bauelemente auf dem Bauelementträger im Wesentlichen in einer Reihe zueinander, insbesondere entlang der Längsachse des Bauelementträgers, angeordnet sind.

In einer Weiterentwicklung der Erfindung weist die Aufnahme für den Aktuator eine Öffnung auf, welche auf einer Linie mit dem Dosierkammerauslass liegt, so dass ein Verschlusselement vom Aktuator durch die Öffnung und den Dosierkammerauslass hin und her bewegt werden kann.

Es ist besonders bevorzugt, dass der Bauelemententräger aus einem transparenten Material gebildet ist.

### Aktuator

Im Sinne dieser Anmeldung ist ein Aktuator eine Vorrichtung, die eine Eingangsgröße in eine andersartige Ausgangsgröße umwandelt und mit der ein Objekt bewegt oder dessen Bewegung erzeugt wird, wobei der Aktuator derart mit wenigstens einem Verschlusselement gekoppelt ist, dass mittelbar oder unmittelbar die Freigabe von Zubereitung aus wenigstens einer Kartuschenkammer bewirkt werden kann.

Der Aktuator kann mittels Antrieben ausgewählt aus der Gruppe der Schwerkraftantriebe, lonenantriebe, Elektroantriebe, Motorenantriebe, Hydraulikantriebe, pneumatischen Antriebe, Zahnradantriebe, Gewindespindelantriebe, Kugelgewindetriebe, Linearantriebe, Rollengewindetriebe, Zahnschneckenantriebe, piezoelektrische Antriebe, Kettenantriebe, und/oder Rückstoßantriebe angetrieben sein.

Insbesondere kann der Aktuator aus einem Elektromotor, der mit einem Getriebe gekoppelt ist, dass die Drehbewegung des Motors in eine Linearbewegung eines an das Getriebe gekoppelten Schlittens umwandelt, ausgebildet sein. Dies ist insbesondere vorteilhaft bei einer schlanken, tellerförmigen Ausbildung der Dosiereinheit.

An dem Aktuator kann wenigstens ein Magnetelement angeordnet sein, dass mit einem gleichgepolten Magnetelement an einem Spender eine Produktabgabe aus dem Behälter bewirkt, sobald die beiden Magnetelemente derart gegeneinander positioniert sind, dass eine magnetische Abstoßung der gleichpoligen Magnetelemente bewirkt und ein berührungsloser Freisetzungsmechanismus realisiert ist.

In einer besonders bevorzugten Ausführung der Erfindung, ist der Aktuator ein bistabiler Hubmagnet, der zusammen mit einem in den bistabilen Hubmagneten eingreifenden, als Tauchkern ausgebildeten Verschlusselements ein impulsgesteuertes, bi-stabiles Ventil bildet. Bistabile Hubmagnete sind elektromechanische Magnete mit linearer Bewegungsrichtung, wobei der Tauchkern in jeder Endposition unbestromt arretiert.

Bistabile Hubmagneten bzw. -ventile sind im Stand der Technik bekannt. Ein bistabiles Ventil benötigt für den Wechsel der Ventillagen (offen/geschlossen) einen Impuls und verbleibt dann in dieser Stellung bis ein Gegenimpuls an das Ventil gesendet wird. Daher spricht man auch von einem impulsgesteuerten Ventil. Ein wesentlicher Vorteil derartig impulsgesteuerter Ventile ist, dass sie keine Energie verbrauchen um in den Ventilendlagen, der Verschlussstellung und Abgabestellung, zu verweilen, sondern lediglich einen Energieimpuls zum Wechsel der Ventillagen benötigen, somit die Ventilendlagen als stabil zu betrachten sind. Ein bistabiles Ventil bleibt in jener Schaltstellung, welche zuletzt ein Steuersignal erhalten hat.

Per Stromimpuls wird das Verschlusselement (Tauchkern) in eine Endposition gefahren. Der Strom wird abgeschaltet, das Verschlusselement hält die Position. Per Stromimpuls wird das Verschlusselement in die andere Endposition gefahren. Der Strom wird abgeschaltet, das Verschlusselement hält die Position.

Eine bistabile Eigenschaft von Hubmagneten kann auf unterschiedliche Weise realisiert werden. Zum einen ist eine Teilung der Spule bekannt. Die Spule wird mehr oder minder mittig geteilt, so dass ein Spalt entsteht. In diesen Spalt ist ein Permanentmagnet eingesetzt. Der Tauchkern selber ist sowohl vorne wie hinten so abgedreht, dass er in der jeweiligen Endposition eine plan aufliegende Fläche zum Rahmen des Magneten hat. Über diese Fläche fließt das Magnetfeld des Permanentmagneten. Der Tauchkern haftet hier. Alternativ ist auch der Einsatz von zwei getrennten Spulen möglich. Das Prinzip ist ähnlich wie dem bistabilen Hubmagnet mit geteilter Spule. Der Unterschied liegt darin, dass es sich tatsächlich um elektrisch zwei verschiedene Spulen handelt. Diese werden getrennt voneinander angesteuert, je nachdem in welche Richtung der Tauchkern bewegt werden soll.

Es ist somit insbesondere zu bevorzugen, dass das Verschlußelement mit dem Aktuator in der Art gekoppelt ist, daß das Verschlußelement vom Aktuator in eine Verschlußstellung und in eine Durchlaßstellung (Abgabestellung) versetzbar ist, wobei das Verschlußelement als Auf-/Zu-Ventilelement ausgebildet ist, daß der Aktuator derart ausgebildet ist, daß er durch einen passenden Impuls angesteuert wahlweise bestimmbar eine von zwei Endstellungen einnimmt und ohne Ansteuerung die erreichte Endstellung stabil beibehält, und daß somit die Kombination ein impulsgesteuertes, bistabiles Auf-/Zu-Ventil bildet.

Insbesondere kann der Aktuator hierzu als ein bistabiles Solenoid mit einem einen Anker aufnehmenden Raum und einem diesen umgebenden äußeren Aufnahmeraum ausgeführt sein. Der Anker des bistabilen Solenoids kann so ausgebildet sein, dass er das Verschlußelement bildet oder mit diesem gekoppelt ist.

Um eine Trennung zwischen einem Feucht- und einem Trockenraum im Dosiergerät zu bewirken, kann der den Anker aufnehmende Raum des Aktuators von dem äußeren Aufnahmeraum des Aktuators flüssigkeitsdicht und vorzugsweise auch gasdicht getrennt sein.

Es ist ferner vorteilhaft, zumindest die äußere Oberfläche des Ankers aus einem von dem zu dosierenden Wasch- oder Reinigungsmittel nicht angreifbaren Werkstoff, insbesondere aus einem Kunststoffmaterial, zu bilden.

Der Anker umfasst bevorzugt aus einen Kern aus einem magnetisierbaren, insbesondere einem ferromagnetischen Werkstoff und einem im äußeren Aufnahmeraum positionierten Permanentmagnet wobei an dessen beiden axialen Enden jeweils eine Spule angeordnet ist.

Es ist des weiteren bevorzugt, dass im Anker an seinen axialen Enden Permanentmagnete axial antipolig angeordnet sind und dass im äußeren Aufnahmeraum an beiden axialen Enden Jochringe aus einem ferromagnetischen Material, insbesondere aus Eisen, und zwischen diesen eine Spulenwicklung angeordnet sind.

Hierbei ist es von Vorteil, dass der axiale Abstand der Jochringe größer ist als der axiale Abstand der Permanentmagnete.

Ferner können im Anker an seinen axialen Enden Jochringe angeordnet sein wobei im äußeren Aufnahmeraum an beiden axialen Enden Permanentmagnete axial antipolig angeordnet sind und zwischen diesen eine Spulenwicklung angeordnet ist. Der axiale Abstand der Permanentmagnete ist hierbei bevorzugt größer als der axiale Abstand der Jochringe.

Insbesondere ist die eine Aktuator-/Verschlußelement-Kombination vorgesehen in einem Dosiergerät eines Dosiersystems mit einer Kartusche für fließfähige Wasch- oder Reinigungsmittel mit einer Mehrzahl von Kammern zur räumlich separierten Aufnahme jeweils voneinander verschiedener Zubereitungen eines Wasch- oder Reinigungsmittels und mit einem mit der Kartusche kuppelbaren Dosiergerät, wobei das Dosiergerät aufweist: eine Energiequelle, eine Steuereinheit, eine Sensoreinheit, einen Aktuator, der so mit der Energiequelle und der Steuereinheit verbunden ist, daß ein Steuersignal der Steuereinheit eine Betätigung des Aktuators bewirkt, ein Verschlusselement, das mit dem Aktuator in der Art gekoppelt ist, daß es vom Aktuator in eine Verschließstellung und in eine Durchlassstellung (Abgabestellung) versetzbar ist, wenigstens eine Dosierkammer, die bei mit einer Kartusche zusammengesetztem Dosiergerät mit mindestens einer der Kartuschenkammern der Kartusche kommunizierend verbunden ist, wobei die Dosierkammer einen Einlaß für das Einströmen von Wasch- oder Reinigungsmittel aus einer Kartuschenkammer und einen Auslaß für das Ausströmen von Wasch- oder Reinigungsmittel aus der Dosierkammer in die Umgebung aufweist und wobei zumindest der Auslaß der Dosierkammer durch das Verschlußelement verschließbar oder freigebbar ist.

Insbesondere ist der Aktuator in einen Bauelementträger in der Art angeordnet, daß in Gebrauchsstellung des Dosiergeräts eine Aufnahme für den Aktuator am Bauelementträger in Schwerkraftrichtung oberhalb der Dosierkammer angeordnet ist. Hierbei ist es genz besonders von Vorteil, dass in Gebrauchsstellung des Dosiergeräts der Einlaß der Dosierkammer am Bauelementträger oberhalb der Aufnahme des Aktuators angeordnet ist.

Es ist auch denkbar, daß das Dosiergerät einen Bauelementträger aufweist bei dem in Gebrauchsstellung des Dosiergeräts eine Aufnahme für den Aktuator am Bauelementträger seitlich neben der Dosierkammer angeordnet ist.

Die Aufnahme für den Aktuator weist bevorzugt eine Öffnung auf, die auf einer Linie mit dem Auslaß der Dosierkammer liegt, wobei das Verschlußelement vom Aktuator durch die Öffnung zum Auslaß hin und her bewegbar ist.

### Verschlusselement

Bei einem Verschlusselement im Sinne dieser Anmeldung handelt es sich um ein Bauelement, auf dass der Aktuator einwirkt und dass als Folge dieses Einwirkens die Öffnung bzw. den Verschluss einer Auslassöffnung bewirkt.

Bei dem Verschlusselement kann es sich beispielsweise um Ventile handeln, die durch den Aktuator in eine Produktabgabestellung oder Verschlussstellung gebracht werden können.

Besonders bevorzugt ist die Ausführung des Verschlusselements und des Aktuators in Form eines Magnetventils, bei der der Spender durch das Ventil und der Aktuator durch den elektromagnetischen oder piezoelektrischen Antrieb des Magnetventils ausgestaltet sind. Insbesondere bei der Verwendung einer Mehrzahl von Behältern und somit zu dosierenden Zubereitungen, lässt sich durch die Verwendung von Magnetventilen die Menge sowie die Zeitpunkte der Dosierung sehr genau regeln.

Es ist daher vorteilhaft, die Abgabe von Zubereitungen aus jeder Auslassöffnung einer Kammer mit einem Magnetventil zu steuern, indem das Magnetventil mittelbar oder unmittelbar die Freigabe von Zubereitung aus der Produktabgabeöffnung bestimmt.

### Sensor

Ein Sensor im Sinne dieser Anmeldung ist ein Messgrößenaufnehmer oder Messfühler, der bestimmte physikalische oder chemische Eigenschaften und/oder die stoffliche Beschaffenheit seiner Umgebung qualitativ oder als Messgröße quantitativ erfassen kann.

Die Dosiereinheit weist bevorzugt wenigstens einen Sensor auf, der zur Erfassung einer Temperatur geeignet ist. Der Temperatursensor ist insbesondere zur Erfassung einer Wassertemperatur ausgebildet.

Es ist ferner bevorzugt, dass die Dosiereinheit einen Sensor zur Erfassung der Leitfähigkeit umfasst, wodurch insbesondere das Vorhandensein von Wasser bzw. das Versprühen von Wasser, insbesondere in einer Geschirrspülmaschine, erfasst wird.

Die Dosiereinheit weist in einer Weiterentwicklung der Erfindung einen Sensor auf, der physikalische, chemische und/oder mechanische Parameter aus der Umgebung der Dosiereinheit bestimmen kann. Die Sensoreinheit kann einen oder mehrere aktive und/oder passive Sensoren zur qualitativen und/oder quantitativen Erfassung mechanischer, elektrischer, physikalischer und/oder chemischer Größen umfassen, die als Steuersignale an die Steuereinheit geleitet werden.

Insbesondere können die Sensoren der Sensoreinheit aus der Gruppe der Zeitgeber, Temperatursensoren, Infrarotsensoren, Helligkeitssensoren, Temperatursensoren, Bewegungssensoren, Dehnungssensoren, Drehzahlsensoren, Näherungssensoren, Durchflusssensoren, Farbsensoren, Gassensoren, Vibrationssensoren, Drucksensoren, Leitfähigkeitssensoren, Trübungssensoren, Schallwechseldrucksensoren, "Lab-on-a-Chip"-Sensoren, Kraftsensoren, Beschleunigungssensoren, Neigungssensoren, pH-Wert-Sensoren, Feuchtigkeitssensoren, Magnetfeldsensoren, RFID-Sensoren, Magnetfeldsensoren, Hall-Sensoren, Bio-Chips, Geruchssensoren, Schwefelwasserstoffsensoren und/oder MEMS-Sensoren ausgewählt sein.

Die Sensoren sind insbesondere darauf abgestimmt, den Beginn, Verlauf und das Ende eines Spülprogramms zu detektieren. Hierzu können - beispielhaft und nicht abschließend - die in folgender Tabelle aufgeführten Sensorkombinationen verwendet werden

| Sensor 1 | Sensor 2 | Sensor 3 | Sensor 4 |
|---|---|---|---|
| Leitfähigkeitssensor | Temperatursensor | | |
| Leitfähigkeitssensor | Temperatursensor | Helligkeitssensor | |
| Leitfähigkeitssensor | Temperatursensor | Helligkeitssensor | Trübungssensor |
| Schallsensor | Temperatursensor | | |

Mittels des Leitfähigkeitssensors kann beispielsweise detektiert werden, ob der Leitfähigkeitssensor von Wasser benetzt ist, so dass sich damit z.B. feststellen lässt, ob sich Wasser in der Geschirrspülmaschine befindet.

Spülprogramme weisen in der Regel einen charakteristischen Temperaturverlauf, der u.a. von der Erwärmung des Spülwassers und der Trocknung des Spülguts bestimmt wird, welcher über einen Temperatursensor erfassbar ist.

Mittels eines Helligkeitssensors kann beispielsweise der Lichteinfall ins Innere eines Geschirrspülers beim Öffnen der Geschirrspülmaschinentür detektiert werden, woraus sich z.B. auf ein Ende des Spülprogramms schließen lässt.

Um den Verschmutzungsgrad des zu reinigenden Spülguts in der Spülmaschine zu ermitteln, kann auch ein Trübungssensor vorgesehen sein. Hieraus lässt sich beispielsweise auch ein auf die festgestellte Verschmutzungssituation zutreffendes Dosierprogramm im Dosiergerät auswählen.

Es ist auch denkbar, den Verlauf eines Spülprogramms mit Hilfe wenigstens eines Schallsensors zu erkennen, indem spezifische Schall- und/oder Vibrationsemissionen z.B. beim Pumpen bzw. Abpumpen von Wasser, detektiert werden.

Selbstverständlich ist es dem Fachmann möglich, beliebige, geeignete Kombinationen mehrerer Sensoren zur Erzielung einer Spülprogrammüberwachung zu verwenden.

Die Datenleitung zwischen Sensor und Steuereinheit kann über ein elektrisch leitendes Kabel oder kabellos realisiert sein. Prinzipiell ist es auch denkbar, dass wenigstens ein Sensor außerhalb des Dosiergeräts im Inneren einer Geschirrspülmaschine positioniert oder positionierbar ist und eine Datenleitung - insbesondere kabellos - zur Übermittlung der Messdaten vom Sensor an das Dosiergerät ausgebildet ist.

Eine kabellos ausgebildete Datenleitung ist insbesondere durch die Übertragung elektromagnetischer Wellen oder Licht ausgebildet. Es ist bevorzugt, eine kabellose Datenleitung nach normierten Standards wie beispielsweise Bluetooth, IrDA, IEEE 802, GSM, UMTS etc. auszubilden.

Um eine effiziente Fertigung und Zusammenbau des Dosiergeräts zu ermöglichen, ist es jedoch auch möglich, dass wenigstens eine Sensoreinheit an oder in der Steuereinheit angeordnet ist. Beispielsweise ist es möglich, einen Temperatursensor in dem Dosiergerät bzw. direkt auf der die Steuereinheit tragenden Platine vorzusehen, so dass der Temperatursensor keinen direkten Kontakt mit der Umgebung aufweist.

In einer besonders bevorzugten Ausbildung der Erfindung ist die Sensoreinheit am Boden des Dosiergeräts angeordnet wobei in Gebrauchsstellung der Boden des Dosiergeräts in Schwerkraftrichtung nach unten gerichtet ist. Hierbei ist es insbesondere bevorzugt, dass die Sensoreinheit einen Temperatur- und/ oder einen Leitfähigkeitssensor umfasst. Durch eine derartige Konfiguration wird sichergestellt, dass durch die Sprüharme des Geschirrspülers Wasser auf die Unterseite des Dosiergeräts und somit in Kontakt mit dem Sensor gebracht wird. Dadurch, dass durch die bodenseitige Anordnung des Sensors der Abstand zwischen den Sprüharmen und dem Sensor möglichst gering ist, erfährt das Wasser zwischen dem Austritt an den Sprüharmen und dem Kontakt mit dem Sensor nur eine geringe Abkühlung, so dass eine möglichst genaue Temperaturmessung durchgeführt werden kann.

Um den Energieverbrauch des Dosiergeräts bzw. die Lebensdauer der Energiequelle, insbesondere einer Batterie, zu verlängern, können die Energieverbraucher des Dosiergerätes, insbesondere die Steuereinheit, unter Einschluss eines Ein-/Aus-Schalters an die Energiequelle angeschlossen sein und die Energiequelle erst nach Erreichen des Ein-Zustands des Ein-/Aus-Schalters belastet wobei eine Sensoreinheit den Ein-/Aus-Schalter bildet oder mit diesem verbunden ist und diesen schaltet.

Es ist insbesondere bevorzugt, dass die Sensoreinheit unten am Boden des Dosiergerätes zwei mit der Umgebung in Kontakt stehende Kontakte aufweist, insbesondere ausgeführt als nach unten aus dem Boden ragende Kontaktstifte, dass ein Kontakt als Anoden-Kontakt und der andere Kontakt als Kathoden-Kontakt bezüglich der Energiequelle geschaltet ist und dass ohne elektrisch leitende Verbindung zwischen den Kontakten der im Aus-Zustand befindliche Ein-/Aus-Schalter im Aus-Zustand verbleibt und bei Entstehen einer elektrisch leitenden Verbindung zwischen den Kontakten der im Aus-Zustand befindliche Ein-/Aus-Schalter in den Ein-Zustand schaltet.

Es ist ferner bevorzugt, dass der Ein-/Aus-Schalter mit einer Selbsthalteschaltung versehen bzw. kombiniert ist, die eine Selbsthaltung der Energieversorgung der Energieverbraucher nach Erreichen des Ein-Zustandes des Ein-/Aus-Schalters bis zu einem Ausschaltsignal der Steuereinheit gewährleistet bzw. bewirkt.

Der Ein-/Aus-Schalter kann insbesondere als Transistorschaltung ausgeführt sein. Dabei ist es zu bevorzugen, dass der Transistor des Ein-/Aus-Schalters als pnp-Transistor ausgeführt und mit dem Emitter, ggf. über eine Ansteuerschaltung, an die Versorgungsspannung, mit dem Kollektor, ggf. über eine Ansteuerschaltung, an Masse und an den Kathoden-Kontakt und mit der Basis einerseits, ggf. über eine Ansteuerschaltung, an die Versorgungsspannung, andererseits, ggf. über eine Ansteuerschaltung, an den Anoden-Kontakt, geschaltet ist.

Die Ansteuerschaltung weist bevorzugt mindestens einen Ansteuerwiderstand auf, der insbesondere als Widerstands-Spannungsteiler ausgeführt ist.

Ganz besonders vorteilhaft ist es , dass neben der Ein-/Aus-Sensoreinheit eine als Leitfähigkeitssensor ausgeführte Sensoreinheit vorgesehen ist, die unten an dem Boden des Dosiergerätes zwei mit der Umgebung in Kontakt stehende Kontakte aufweist und daß der Anoden-Kontakt der Ein-/Aus-Sensoreinheit gleichzeitig der Anoden-Kontakt der den Leitfähigkeitssensor bildenden Sensoreinheit ist. Hierdurch wird es ermöglicht einen Ein-/AusSchalter und einen Leitfähigkeitssensor in einem Bauteil, einem Transistor, zu realisieren.

Auch ist es möglich, dass die den Temperatursensor bildende Sensoreinheit in einen Kontakt, insbesondere den Kathoden-Kontakt, der den Leitfähigkeitssensor bildenden Sensoreinheit integriert ist.

Hierbei kann der den Temperatursensor aufnehmende Kontakt der den Leitfähigkeitssensor bildenden Sensoreinheit bevorzugt als hohler Kontaktstift ausgeführt sein, in dem der Temperatursensor der den Temperatursensor bildenden Sensoreinheit angeordnet ist.

Um eine kompakte Baugröße zu realisieren ist es des Weiteren von Vorteil, dass die Energiequelle, die Steuereinheit und die Sensoreinheit in einer Baugruppe zusammengefasst am bzw. im Bauelementträger angeordnet ist.

Es ist insbesondere bevorzugt, dass die Kontakte eines bodenseitig angeordneten Leitfähigkeitssensors mit einem elektrisch leitfähigen Silikon umgeben sind. Der Leitfähigkeitssensor kann hierbei insbesondere in Form einer Widerstandsmessung zwischen zwei voneinander beabstandeten, mit der Umgebung des Dosiergeräts in Kontakt stehenden Kontakten ausgebildet sein. Hierbei ist ganz besonders zu bevorzugen, dass das Silikon flächenbündig im Boden des Dosiergeräts eingelassen ist. Vorteilhafter Weise weist das Silikon eine in etwa kreisrunde Grundfläche auf. Das Silikon zeigt eine gute Benetzbarkeit mit Wasser und liefert somit gute Messergebnisse hinsichtlich der Detektierung von Wasser im Geschirrspüler.

Um eine, die Sensorgenauigkeit beeinträchtigende, Polarisation an den Kontakten des Leitfähigkeitssensors bei der Verwendung einer Gleichstromquelle zur vermeiden, ist es vorteilhaft, zwei aufeinanderfolgende Widerstandsmessungen am Leitfähigkeitssensor mit jeweils unterschiedlicher Polarität, also mit einer Vertauschung von Plus- und Minus-Pol, durchzuführen, so dass sich an den Kontakten keine Ladungsüberschüsse bilden können.

### Steuereinheit

Eine Steuereinheit im Sinne dieser Anmeldung ist eine Vorrichtung, die geeignet ist, das Transportieren von Material, Energie und/oder Information zu beeinflussen. Die Steuereinheit beeinflusst hierzu Aktuatoren mit Hilfe von Informationen, insbesondere von Messsignalen der Sensoreinheit, die sie im Sinne des Steuerungsziels verarbeitet.

Insbesondere kann es sich bei der Steuereinheit um einen programmierbaren Mikroprozessor handeln. In einer besonders bevorzugten Ausführungsform der Erfindung ist auf dem Mikroprozessor eine Mehrzahl von Dosierprogrammen gespeichert, die in einer besonders bevorzugten Ausbildung entsprechend dem an das Dosiergerät gekoppelten Behälter auswählbar und ausführbar sind.

Die Steuereinheit weist in einer bevorzugten Ausführungsform keine Verbindung zur möglicherweise vorhandenen Steuerung des Haushaltsgeräts auf. Es werden demnach keine Informationen, insbesondere elektrische, optischen oder elektromagnetischen Signale, direkt zwischen der Steuereinheit und der Steuerung des Haushaltsgeräts ausgetauscht.

In einer alternativen Ausgestaltung der Erfindung ist die Steuereinheit mit der vorhandenen Steuerung des Haushaltsgeräts gekoppelt. Bevorzugt ist diese Kopplung kabellos ausgeführt. Beispielsweise ist es möglich, einen Sender an oder in einer Geschirrspülmaschine, vorzugsweise auf oder an der in der Tür der Geschirrspülmaschine eingelassenen Dosierkammer zu positionieren, der drahtlos ein Signal an die Dosiereinheit überträgt, wenn die Steuerung des Haushaltsgeräts die Dosierung bspw. eines Reinigungsmittels aus der Dosierkammer oder von Klarspüler bewirkt.

In der Steuereinheit können mehrere Programme zur Freigabe von unterschiedlichen Zubereitungen oder zur Freigabe von Produkten in unterschiedlichen Anwendungsfällen gespeichert sein.

Zur Dosierung von insbesondere zur Vergelung neigenden Zubereitungen kann die Steuereinheit derart konfiguriert sein, dass einerseits die Dosierung in hinreichend kurzer Zeit erfolgt um ein gutes Reinigungsergebnis zu gewährleisten und andererseits die Zubereitung nicht so schnell dosiert, dass Vergelungen des Zubereitungsschwalls auftreten. Dies kann beispielsweise durch eine intervallartige Freisetzung realisiert sein, wobei die einzelnen Dosierungsintervalle so eingestellt sind, das sich die entsprechend dosierte Menge vollständig während eines Reiniungszyklus auflösen.

Besonders bevorzugt ist es, dass die Dosierintervalle zur Abgabe einer Zubereitung zwischen 30-90 sec, insbesondere bevorzugt 45-75 sec liegen.

Die Abgabe von Zubereitungen aus dem Dosiergerät kann sequenziell oder zeitgleich erfolgen.

Es ist insbesondere bevorzugt, eine Mehrzahl von Zubereitungen sequenziell in einem Spülprogramm zu dosieren. Insbesondere sind folgende Dosiersequenzen zu bevorzugen

| 1. Dosierung | 2. Dosierung | 3.Dosierung | 4.Dosierung |
|---|---|---|---|
| Enzymatische Reinigungszubereitun g | Alkalische Reinigungszubereitun g | | |
| Alkalische Reinigungszubereitun g | Klarspüler | | |
| Enzymatische Reinigungszubereitun g | Alkalische Reinigungszubereitun g | Klarspüler | |
| Enzymatische Reinigungszubereitun g | Alkalische Reinigungszubereitun g | Klarspüler | Desinfektionszubereitun g |
| Enzymatische Reinigungszubereitun g | Alkalische Reinigungszubereitun g | Klarspüler | Duftstoff |
| Vorbehandlungszubereitung | Enzymatische Reinigungszubereitun g | Alkalische Reinigungszubereitun g | Klarspüler |

Gemäß einer besonders bevorzugten Ausführungsform der Erfindung wirken die Geschirrspülmaschine und das Dosiergerät in der Art zusammen, dass 1 mg bis 1g Tensid im Klarspülprogramm der Geschirrspülmaschine pro m² Spülraumwandfläche freigesetzt werden. Hierdurch wird sichergestellt, dass die Wände des Spülraums auch nach einer Vielzahl von Spülzyklen ihren Glanzgrad beibehalten und das Dosiersystem seine optische Übertragungsfähigkeit beibehält.

Des Weiteren ist es vorteilhaft, dass die Geschirrspülmaschine und das Dosiergerät in der Art zusammenwirken, dass im Vor- und/oder Hauptwaschprogramm der Geschirrspülmaschine wenigstens eine enzymhaltige Zubereitung und/oder alkalische Zubereitung freigesetzt wird, wobei die Freisetzung der enzymhaltigen Zubereitung bevorzugt zeitlich vor der Freisetzung der alkalischen Zubereitung erfolgt.

In einer weiteren, vorteilhaften Ausbildung der Erfindung wirken Geschirrspülmaschine und das Dosiergerät in der Art zusammen, dass 0,1 mg - 250 mg Enzymprotein im Vor- und/oder Hauptwaschprogramm der Geschirrspülmaschine pro m² Spülraumwandfläche freigesetzt werden, wodurch der Glanzgrad der Spülraumwände weiter verbessert bzw. auch nach einer Vielzahl von Spülzyklen erhalten bleibt.

In einer vorteilhaften Weiterentwicklung der Erfindung können Daten wie z.B. Steuer- und/oder Dosierprogramme der Steuereinheit oder von der Steuereinheit gespeicherte Betriebsparameter oder -protokolle aus der Steuereinheit ausgelesen oder in die Steuereinheit geladen werden. Dies kann beispielsweise mittels einer optischen Schnittstelle realisiert sein, wobei die optische Schnittstelle entsprechend mit der Steuereinheit verbunden ist. Die zu übertragenden Daten werden dann als Lichtsignale, insbesondere im sichtbaren Bereich, wobei der Wellenlängenbereich zwischen 600-800nm bevorzugt ist, kodiert und ausgesendet bzw. empfangen. Es ist jedoch auch möglich, einen im Dosiergerät vorhandenen Sensor zur Übertragung von Daten aus und/oder zur Steuereinheit zu verwenden. Beispielsweise können die Kontakte eines Leitfähigkeitssensors, die mit der Steuereinheit verbunden sind und die eine Leitfähigkeitsbestimmung mittels einer Widerstandsmessung an den Kontakten des Leitfähigkeitssensors bereitstellt, zur Datenübertragung verwendet werden.

### Energiequelle

Im Sinne dieser Anmeldung wird als Energiequelle ein Bauelement des Dosiersystems verstanden, welches zweckmäßig ist, eine zum Betrieb der Dosiersystems bzw. des Dosiergeräts geeignete Energie bereit zu stellen. Bevorzugt ist die Energiequelle derart ausgestaltet, dass das Dosiersystem autark ist.

Vorzugsweise stellt die Energiequelle elektrische Energie zur Verfügung. Bei der Energiequelle kann es sich beispielsweise um eine Batterie, einen Akkumulator ein Netzgerät, Solarzellen oder dergleichen handeln.

Besonders vorteilhaft ist es, die Energiequelle austauschbar auszuführen, zum Beispiel in Form einer auswechselbaren Batterie.

Eine Batterie kann beispielsweise ausgewählt sein aus der Gruppe der Alkali-Mangan-Batterien, Zink-Kohle-Batterien, Nickel-Oxyhydroxid-Batterien, Lithium-Batterien, Lithium-Eisensulfid-Batterien, Zink-Luft-Batterien, Zink-Chlorid-Batterien, Quecksilberoxid-Zink-Batterien und/oder Silberoxid-Zink-Batterien.

Als Akkumulator eignen sich beispielsweise Bleiakkumulatoren (Bleidioxid/Blei), Nickel-Cadmium-Akkus, Nickel-Metallhydrid-Akkus, Lithium-Ionen-Akkus, Lithium-Polymer-Akkus, Alkali-Mangan-Akkus, Silber-Zink-Akkus, Nickel-Wasserstoff-Akkus, Zink-Brom-Akkus, Natrium-Nickelchlorid-Akkus und/oder Nickel-Eisen-Akkus.

Der Akkumulator kann insbesondere in derart ausgestaltet sein, dass er durch Induktion wideraufladbar ist.

Es ist jedoch auch denkbar, mechanische Energiequellen bestehend aus einer oder mehrerer Schraubenfeder, Torsionsfeder oder Drehstabfeder, Biegefeder, Luftfeder/Gasdruckfeder und/oder Elastomerfeder auszubilden.

Die Energiequelle ist in dergestalt dimensioniert, dass das Dosiergerät in etwa 300 Dosierzyklen durchlaufen kann, bevor die Energiequelle erschöpft ist. Es ist insbesondere bevorzugt, dass die Energiequelle zwischen 1 und 300 Dosierzyklen, ganz besonders bevorzugt zwischen 10 und 300, weiterhin bevorzugt zwischen 100 und 300 durchlaufen kann, bevor die Energiequelle erschöpft ist.

Ferner können in oder an der Dosiereinheit Mittel zur Energieumwandlung vorgesehen sein, die eine Spannung erzeugen, mittels derer der Akkumulator aufgeladen wird. Beispielsweise können diese Mittel als Dynamo ausgebildet sein, der durch die Wasserströme während eines Spülgangs in einer Geschirrspülmaschine angetrieben wird und die so erzeugte Spannung an den Akkumulator abgibt.

Im Folgenden wird die Erfindung anhand einer lediglich Ausführungsbeispiele darstellenden Zeichnungen näher erläutert. Dabei werden auch besonders bevorzugte Ausgestaltungen und besonders bevorzugte Kombinationen von Merkmalen im Einzelnen weiter beschrieben. Es zeigen:

### Abbildungsverzeichnis

- Figur 1: Autarkes Dosiergerät mit Zwei-Kammer-Kartusche im separierten und zusammengebauten Zustand
- Figur 2: Autarkes Dosiergerät mit Zwei-Kammer-Kartusche angeordnet in einer Schublade einer Geschirrspülmaschine
- Figur 3: Kartusche mit drei Kammern in Vorderansicht
- Figur 4: Drei-Kammer-Kartusche mit Dosiergerät im separierten Zustand in einer perspektivischen Ansicht
- Figur 5: Drei-Kammer-Kartusche mit Belüftungsöffnungen in einer perspektivischen Ansicht
- Figur 6: Dosiergerät und im Haushaltsgerät angeordnete Sendeeinrichtung
- Figur 7: Magnetventil
- Figur 8: Magnetventil
- Figur 9: Dosierkammer mit Schwimmkörper
- Figur 10: Dosierkammer mit Schwimmkörper
- Figur 11: Dosierkammer mit Schwimmkörper
- Figur 12: Dosierkammer mit Schwimmkörper
- Figur 13: Dosiergerät und Kartusche in Explosionsdarstellung
- Figur 14: Bauelementträger in Vorderansicht
- Figur 15: Bauelementträger in einer Explosionsdarstellung
- Figur 16: Bauelementträger in einer Explosionsdarstellung

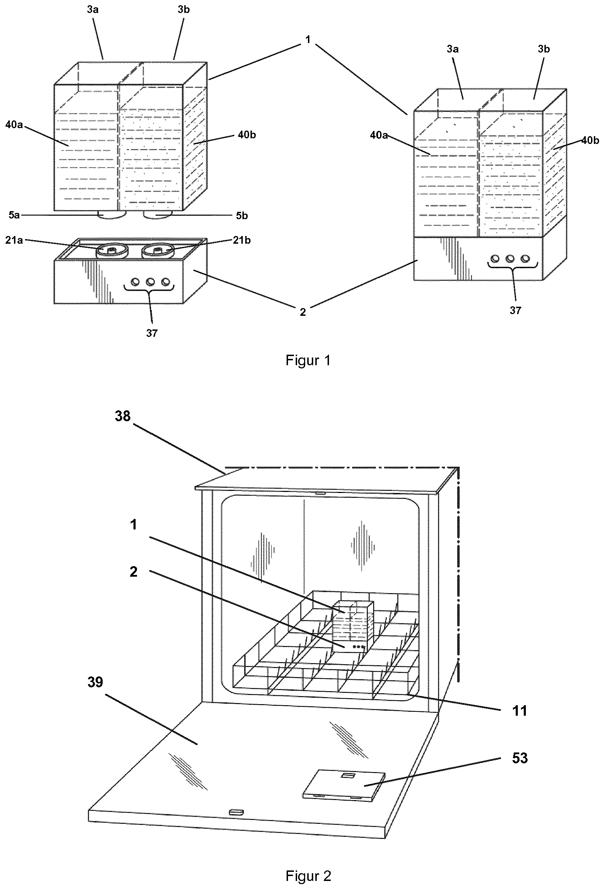

Figur 1 zeigt ein autarkes Dosiergerät 2 mit einer Zwei-Kammer-Kartusche 1 im separierten und zusammengebauten Zustand.

Das Dosiergerät 2 weist zwei Dosierkammereinlässe 21a, 21b zur wiederholt lösbaren Aufnahme der korrespondierenden Auslassöffnungen 5a, 5b der Kammern 3a, 3b der Kartusche 1 auf. An der Vorderseite befinden sich Anzeige- und Bedienelemente 37, die den Betriebszustand des Dosiergeräts 2 anzeigen bzw. auf diesen einwirken.

Die Dosierkammereinlässe 21a, 21b weisen ferner Mittel auf, die beim Aufstecken der Kartusche 1 auf das Dosiergerät 2 die Öffnung des Auslassöffnungen 5a, 5b der Kammern 3a,3b bewirken, so dass im gekoppelten Zustand von Dosiergerät 2 und Kartusche 1 das Innere der Kammern 3a,3b kommunizierend mit den Dosierkammereinlässen 21a, 21b verbunden ist.

Die Kartusche 1 kann aus einer oder mehreren Kammern 3a, 3b bestehen. Die Kartusche 1 kann einstückig mit mehreren Kammern 3a, 3b oder mehrstückig ausgebildet sein, wobei dann die einzelnen Kammern 3a, 3b zu einer Kartusche 1 zusammengefügt werden, insbesondere durch stoffschlüssige, formschlüssige oder kraftschlüssige Verbindungsmethoden.

Insbesondere kann die Fixierung durch eine oder mehrere der Verbindungsarten aus der Gruppe der Snap-In Verbindungen, Pressverbindungen, Schmelzverbindungen, Klebverbindungen, Schweißverbindungen, Lötverbindungen, Schraubverbindungen, Keilverbindungen, Klemmverbindungen oder Prellverbindungen erfolgen. Insbesondere kann die Fixierung auch durch einen Schrumpfschlauch (sog. Sleeve) ausgebildet sein, der in einem erwärmten Zustand zumindest abschnittsweise über die Kartusche gezogen wird und die Kartusche im abgekühlten Zustand fest umschließt.

Um vorteilhafte Restentleerungseigenschaften der Kartusche 1 bereitzustellen, kann der Boden der Kartusche 1 trichterförmig zur Abgabeöffnung 5a, 5b hin geneigt sein. Des Weiteren kann die Innenwand der Kartusche 1 durch geeignete Materialwahl und/oder Oberflächenausgestaltung in derart ausgebildet sein, dass eine geringe Materialanhaftung des Produkts an der inneren Kartuschenwand realisiert ist. Auch durch diese Maßnahme lässt sich die Restentleerbarkeit der Kartusche 1 weiter optimieren.

Die Kammern 3a, 3b der Kartusche 1 können gleiche oder voneinander verschiedene Füllvolumina aufweisen. Bei einer Konfiguration mit zwei Kammern 3a, 3b beträgt das Verhältnis der Kammervolumina bevorzugt 5:1, bei einer Konfiguration mit drei Kammern bevorzugt 4:1:1, wobei diese Konfigurationen insbesondere zur Verwendung in Geschirrspülmaschinen geeignet sind.

Eine Verbindungsmethode kann auch darin bestehen, dass die Kammern 3a, 3b in einen der korrespondierenden Dosierkammereinlässen 21a, 21b des Dosiergeräts 2 gesteckt und so gegeneinander fixiert werden.

Die Verbindung zwischen den Kammern 3a, 3b kann insbesondere lösbar ausgebildet sein, um ein separates Austauschen einer Kammer zu erlauben.

Die Kammern 3a, 3b beinhalten jeweils eine Zubereitung 40a, 40b. Die Zubereitung 40a, 40b können gleiche oder unterschiedliche Zusammensetzung aufweisen.

Vorteilhafter Weise sind die Kammern 3a, 3b aus einem transparenten Material gefertigt, so dass der Füllstand der Zubereitungen 40a, 40b von Außen durch den Benutzer sichtbar ist. Es kann jedoch auch von Vorteil sein, wenigstens eine der Kammern aus einem opaken Material zu fertigen, insbesondere dann, wenn die in dieser Kammer befindliche Zubereitung lichtsensitive Inhaltsstoffe enthält.

Die Auslassöffnungen 5a, 5b sind so ausgestaltet, dass sie mit den korrespondierenden Dosierkammereinlässen 21a, 21b eine form- und/oder kraftschlüssige, insbesondere flüssigkeitsdichte, Verbindung ausbilden.

Besonders vorteilhaft ist es, dass jede der Auslassöffnungen 5a, 5b so ausgebildet ist, dass sie nur auf einen der Dosierkammereinlässe 21a, 21b passt, wodurch verhindert wird, dass eine Kammer versehentlich auf einen falschen Dosierkammereinlass gesteckt wird. Dies kann beispielsweise durch unterschiedlich große oder bezüglich der Grundform verschiedene Auslassöffnungen 5a, 5b und/oder Dosierkammereinlässe 21a, 21b realisiert sein.

Die Kartusche 1 weist üblicherweise ein Füllvolumen von <5.000 ml, insbesondere <1.000 ml, bevorzugt <500ml, besonders bevorzugt <250 ml, ganz besonders bevorzugt < 50 ml auf.

Die Dosiereinheit 2 und die Kartusche 1 können im zusammengefügten Zustand insbesondere den Geometrien der Geräte an oder in denen sie angewendet werden angepasst sein um einen möglichst geringen Nutzvolumenverlust zu gewährleisten. Zur Verwendung der Dosiereinheit 2 und der Kartusche 1 in Geschirrspülmaschinen ist es besonders vorteilhaft, die Dosiereinheit 2 und die Kartusche 1 in Anlehnung an in Geschirrspülmaschinen zu reinigendem Geschirr auszuformen. So kann die Dosiereinheit 2 und die Kartusche 1 beispielsweise plattenförmig, in etwa in den Abmessungen eines Tellers, ausgebildet sein. Hierdurch kann die Dosiereinheit Platz sparend im Unterkorb positioniert werden.

Die Auslassöffnungen 5a, 5b der Kartusche 1 sind bevorzugt auf einer Linie bzw. in einer Flucht angeordnet, wodurch eine schlanke, tellerförmige Ausbildung des Dosierspenders ermöglicht ist.

Figur 2 zeigt ein autarkes Dosiergerät mit einer Zwei-Kammer-Kartusche 1 in der Geschirrschublade 11 bei geöffneter Geschirrspülmaschinentür 39 einer Geschirrspülmaschine 38. Man erkennt, dass das Dosiergerät 2 mit der Kartusche 1 prinzipiell an einer beliebigen Stelle innerhalb der Geschirrschublade 11 positionierbar ist, wobei es von Vorteil ist, ein teller- oder becherartig ausgeformtes Dosiersystem 1,2 in einer entsprechenden Teller- oder Becheraufnahme der Geschirrschublade 11 vorzusehen. In der Geschirrspülmaschinentür 39 befindet sich eine Dosierkammer 53, in die eine Geschirrspülmaschinenreinigerzubereitung gegeben werden kann, beispielsweise in Form einer Tablette. Befindet sich das Dosiersystem 1,2 im betriebsbereiten Zustand im Inneren des Geschirrspülers 38, so ist eine Reinigungszubereitungszugabe für jeden Spülzyklus über die Dosierkammer 53 nicht notwendig, da eine Reinigungsmittelabgabe für eine Mehrzahl von Spülgängen über das Dosiersystem 1,2 realisiert ist, was nachfolgend noch näher erläutert wird. Vorteilhaft ist bei dieser Ausführung der Erfindung, dass bei Anordnung des autarken Dosiersystems 1,2 in der unteren Geschirrschublade 11 die Abgabe der Zubereitungen 40a,40b aus der Kartusche 1 direkt über die bodenseitig am Dosiergerät angeordneten Auslassöffnungen in die Spülwasserflotte erfolgt, so dass eine schnelle Lösung und gleichmäßige Verteilung der Spülzubereitungen im Spülprogramm gewährleistet ist.

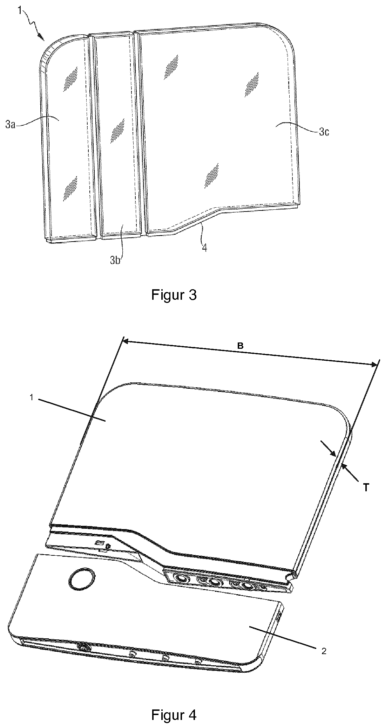

Figur 3 zeigt eine weitere mögliche Ausführungsform der Kartusche 1 mit drei Kammern 3a, 3b, 3c. Die erste Kammer 3a und die zweite Kammer 3b weisen ein in etwa gleiches Füllvolumen auf. Die dritte Kammer 3c hat ein Füllvolumen, dass etwa 5 mal so groß ist wie das einer der Kammern 3a oder 3b. Der Kartuschenboden 4 weist im Bereich der dritten Kammer 3c einen rampenartigen Absatz auf. Durch diese asymmetrische Gestaltung der Kartusche 1 kann sichergestellt werden, dass die Kartusche 1 in einer dafür vorgesehenen Position mit dem Dosiergerät 2 koppelbar ist und ein Einsetzen in einer falschen Lage durch eine korrespondierende Ausgestaltung des Dosiergeräts 2 bzw. der Konsole 54 verhindert ist.

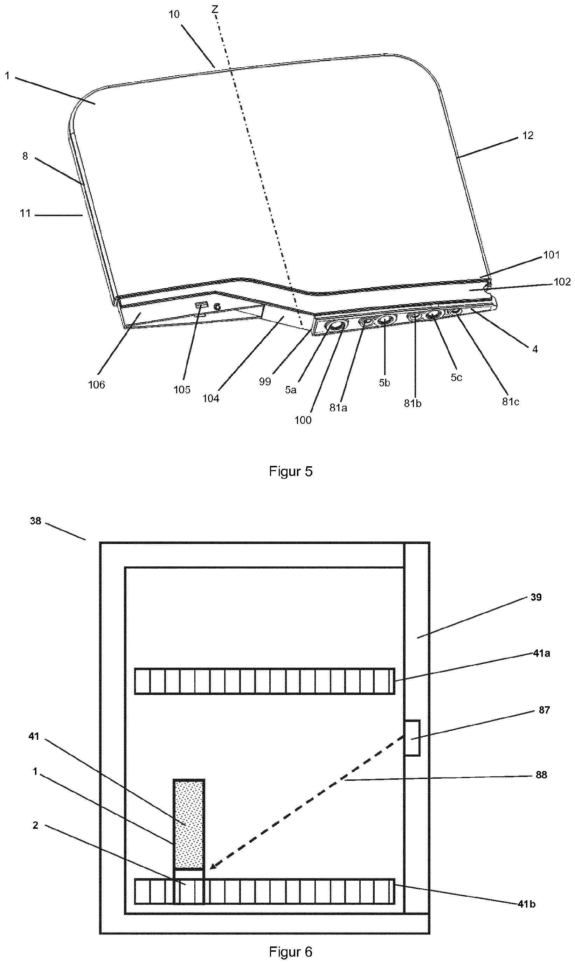

Figur 4 zeigt eine weitere Ausführungsform der Kartusche 1 und des Dosiergeräts 2 im nicht miteinander gekoppelten Zustand. Die Kartusche 1 aus Figur 4 wird anhand der Figur 5 näher erläutert.

Figur 5 zeigt die aus Figur 4 bekannte Kartusche 1 einer perspektivischen Ansicht. Am Kartuschenboden 4 sind abwechselnd voneinander Auslassöffnungen 5 und Belüftungsöffnungen 81 angeordnet. Für jede der Kammern in der Kartusche 1 ist jeweils eine Auslassöffnung 5 und eine Belüftungsöffnung 81 vorgesehen. Die Breite (B) ist wesentlich größer als die Tiefe (T) der Kartusche 1. Das Verhältnis der Tiefe (T) zur Breite (B) der Kartusche 1 beträgt in etwa 1:20.

Der Bereich des Kartuschenbodens 4, an dem die Auslass- und Belüftungsöffnungen angeordnet sind, ist von einem umlaufenden Kragen 99 umschlossen. Dieser Kragen 99 bewirkt zum einen eine strukturelle Verstärkung der Kartusche 1 im Bodenbereich, was insbesondere beim Einsetzen der Kartusche 1, wenn auf den Bodenbereich 4 entsprechende Andruckkräfte zur Kopplung der Kartusche 1 mit dem Dosiergerät 2 einwirken, eine Deformation im Bodenbereich 4 verhindert, so dass ein kontrolliertes und sicheres Einsetzen der Kartusche 1 in das Dosiergerät 2 ermöglicht wird.

Ferner bietet der Kragen 99 einen Schutz gegen unerwünschte mechanische Einwirkungen auf die Verschlüsse der Auslass- und Belüftungsöffnungen. Wie aus Figur 4 und Figur 5 zu erkennen ist, sind die Auslass- und Belüftungsöffnungen 5, 81 gegenüber dem Kragen 99 zurückversetzt, so dass die Öffnungen 5,81 beispielsweise vor dem unmittelbaren Einwirken von Gegenständen die größer als die Öffnungen sind geschützt sind.

Wie aus Figur 5 des Weiteren ersichtlich ist, weisen die Auslass- und Belüftungsöffnungen 5,81 jeweils einen Kragen 100 auf. Auch dieser die Auslass- und Belüftungsöffnungen 5,81 einfassender Kragen 100 dient der strukturellen Verstärkung der Auslass- und Belüftungsöffnungen 5,81 im Bodenbereich 4 der Kartusche 1. Ferner kann der Kragen 100 als Befestigung für Verschlussmittel der Auslass- und Belüftungsöffnungen 5,81 dienen, beispielsweise für Verschlussstopfen oder Verschlussdeckel.

Der Kragen 100 einer der Auslass- und Belüftungsöffnungen 5,81 ist gegenüber dem Kragen 99 zurückversetzt, so dass der Kragen 100 nicht über den Rand des Kragens 99 hinausragt.

Der Figur 5 kann ferner entnommen werden, dass die Kartusche 1 asymmetrisch bezüglich Ihrer Achse Z-Z ausgebildet ist. Durch diese Asymmetrie wird bewirkt, dass die Kartusche 1 in nur einer definierten Weise mit dem Dosiergerät 2 - insbesondere mit den Einlassöffnungen 21 des Dosiergeräts 2 - koppelbar ist. Hierdurch wird ein mechanisches Schlüssel-Schloss-Prinzip zwischen Kartusche 1 und Dosiergerät 2 ausgebildet, dass eine Fehlbedienung beim Koppeln der Kartusche 1 mit dem Dosiergerät 2 verhindert.

Die Asymmetrie der Kartusche 1 ist unter anderem auch dadurch bewirkt, dass der Boden 4 zwei Ebenen aufweist, wobei die erste Ebene durch den die Auslass- und Belüftungsöffnungen 5,81 einschließenden Kragen 99 gebildet und die zweite Ebene ein Bodenabschnitt ist, der über eine Rampe 104 zum Kartuschenkopf 10 hin versetzt ist, was beispielsweise gut in Figur 4 und Figur 5 zu erkennen ist.

Ausgehend von der Rampe 104 erstreckt sich vom Bodenabschnitt der zweiten Ebene ein weiterer Kragen 105, der eine Öffnung 106 aufweist. Die Öffnung 106 bildet mit einem korrespondierenden Eingriff des Dosiergeräts 2 eine lösbare Rastverbindung zur Sicherung des Kopplungszustandes der Kartusche 1 mit dem Dosiergerät 2.

In Figur 5 ist des Weiteren eine umlaufende Kante 101 im unteren, bodenseitigen Bereich der Kartusche 1 zu erkennen. Von dieser Kante 101 erstreckt sich in Bodenrichtung ein umlaufender Wandabschnitt 102 der Kartusche 1, der zum Inneren der Kartusche 1 zurückversetzt ist, so dass zwischen der Kante 101 und Wandabschnitt 102 ein zum Inneren der Kartusche hin verlaufende Schulter ausgebildet ist.

Das Dosiergerät 2 ist derart ausgebildet, dass der umlaufende Wandabschnitt 102 in den Kragen 103 des Dosiergeräts 2 eingeführt werden kann, wobei in der Kopplungsstellung von Kartusche 1 und Dosiergerät 2, die Kante 101 der Kartusche auf dem Kragen 103 des Dosiergeräts aufliegt, so dass das der vom Kragen 103 des Dosiergeräts 2 umschlossene Raum wenigstens vor Spritzwassereintritt geschützt ist. Der Kragen 103 des Dosiergeräts 2 und die Kante 101 der Kartusche können insbesondere auch so konfiguriert sein, dass im Kopplungszustand von Kartusche 1 und Dosiergerät 2 ein Eintritt von Wasser in den vom Kragen 103 umschlossenen Raum des Dosiergeräts durch ein im Wesentlichen dichtiges Aufliegen der Kante 101 auf dem Kragen 103 verhindert ist.

Ferner bewirkt der nach Innen versetzte Wandabschnitt 102 der Kartusche in Verbindung mit dem dosiergeräteseitigen Kragen 103 eine Führung der Kartusche 1 beim Einsetzen in das Dosiergerät 2.

In Figur 6 erkennt man eine Geschirrspülmaschine 38 in einer schematischen Querschnittsansicht. Im Inneren der Geschirrspülmaschine 38 befinden sich übereinander angeordnet, zwei Geschirrschubladen 41a, 41b zur Aufnahme von Spülgut wie beispielsweise Tellern, Tassen usw.. Die Geschirrspülmaschine 38 besitzt eine schwenkbare Tür 39, die in Figur 6 im geschlossen Zustand gezeigt ist. In der Geschirrspülmaschinentür 39 ist eine Sendeeinheit 87 integriert, die mit der Steuerung der Geschirrspülmaschine 38 gekoppelt ist. Bevorzugt ist die Sendeeinheit 87 in einem Kombidosiergerät integriert.

Die Sendeeinheit 87 umfasst eine LED, die ein optisches Signal 88, welches ein Träger einer Steuerinformation ist, ins Innere der Geschirrspülmaschine 38 aussendet. Dieses Signal und seine Richtung sind durch den Pfeil in Figur 6 angedeutet. Durch die gebrochene Linie des Pfeils wird angedeutet, dass es sich bei den von der Sendeeinheit 87 ausgesendeten optischen Signalen 88 um Lichtblitze bzw. Lichtimpulse handelt.

In der unteren Geschirrschublade 41b ist das Dosiergerät 2 mit einer Kartusche 1 positioniert. Selbstverständlich ist es möglich, das Dosiergerät 2 mit der Kartusche 1 an jeder beliebigen, geeigneten Stelle der unteren oder oberen Geschirrschublade 41 anzuordnen, wobei in oder an der Geschirrschublade 41 vorgesehene Telleraufnahmen zur Anordnung des Dosiergeräts 2 zu bevorzugen sind.

Das Dosiergerät 2 verfügt über eine Empfangseinheit 91, die nicht in Figur 6 dargestellt ist. Die von der Sendeeinheit 87 ausgesendeten optischen Signale 88 werden von der Empfangseinheit 91 des Dosiergeräts 2 empfangen und durch die Steuereinheit des Dosiergeräts 2 ausgewertet bzw. umgewandelt.

Insbesondere kann zu Beginn eines Spülprogramms ein optisches Signal 88 von der Sendeeinheit 87 ausgesendet werden, dass nach Empfang durch das Dosiergerät 2 bewirkt, dass die Steuerung des Dosiergeräts 2, insbesondere die Steuerung von Dosierzeitpunkten und -mengen auf die Steuerung der Geschirrspülmaschine 38 übergeht. Dies ist insbesondere dann von Vorteil, wenn die Steuerung des Dosiergeräts 2 über eigene Dosierprogramme für einen von der Geschirrspülmaschine 38 autarken Betrieb verfügt, diese aber bei der Detektion eines entsprechenden Signals 88 einer vorhandenen Sendeeinheit 87 nicht ausgeführt werden sollen.

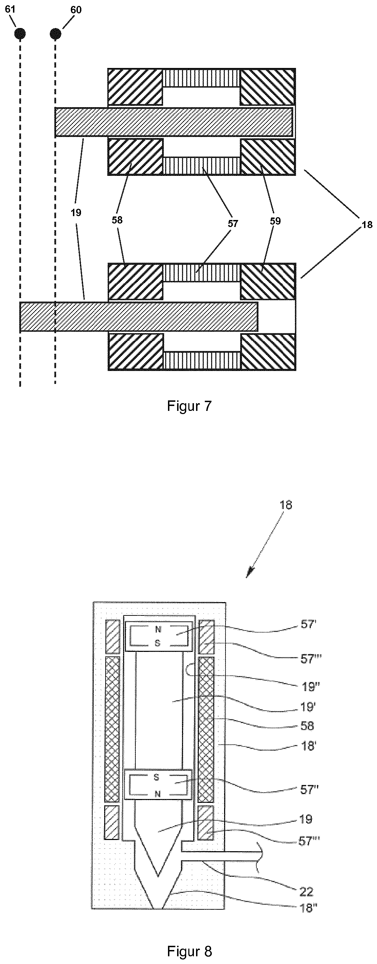

Figur 7 und Figur 8 zeigen eine Aktuator-/Verschlußelement-Kombination für ein Dosiergerät 2 eines zuvor beschriebenen Dosiersystems für fließfähige Wasch- oder Reinigungsmittel.

Eingezeichnet ist ein Aktuator 18 und ein Verschlußelement 19. Vorgesehen ist, daß das Verschlußelement 19 als Auf-/Zu-Ventilelement ausgebildet ist, daß der Aktuator 18 derart ausgebildet ist, daß er durch einen passenden Impuls angesteuert wahlweise bestimmbar eine von zwei Endstellungen einnimmt und ohne Ansteuerung die erreichte Endstellung stabil beibehält, und daß somit die Kombination ein impulsgesteuertes, bistabiles Auf-/Zu-Ventil bildet.

In beiden Zeichnungen ist erkennbar, daß nach einer entsprechend bevorzugten Ausführungsform der Aktuator 18 als ein bistabiles Solenoid mit einem einen Anker 19' aufnehmenden Raum 19" und einem diesen umgebenden äußeren Aufnahmeraum 18' ausgeführt ist.

Insbesondere Figur 8 läßt eine besonders zweckmäßige Ausführungsform dergestalt erkennen, daß der Anker 19' des bistabilen Solenoids das Verschlußelement 19 bildet oder mit diesem gekoppelt ist. Man erkennt hier das Verschlußelement 19 als Ventilkonus am unteren Ende des Ankers 19'. Zum Ventilkonus des Verschlußelements 19 gehört ein konusförmiger Ventilsitz 18" unten am Aktuator 18. In Figur 8 erkennt man dabei rechts den Auslaß 22 der seitlich neben dem Aktuator 18 sitzenden Dosierkammer 20, die hier nicht dargestellt ist.

Nach besonders bevorzugter Lehre der Erfindung ist vorgesehen, daß der den Anker 19' aufnehmende Raum 19" des Aktuators 18 von dem äußeren Aufnahmeraum 18' des Aktuators 18 flüssigkeitsdicht und vorzugsweise auch gasdicht getrennt ist. Dadurch ist sichergestellt, daß die wesentlichen, empfindlichen Bestandteile des Aktuators 18 sich im trockenen Bereich befinden, also schon wegen dieser Abdichtung der Räume mit dem fließfähigen Wasch- oder Reinigungsmittel nicht in Kontakt kommen können.

Für den Anker 19' selbst sollten ebenfalls Maßnahmen getroffen werden, um ihn, jedenfalls seine metallischen Bestandteile, mit dem fließfähigen Wasch- oder Reinigungsmittel nicht in Kontakt kommen zu lassen. Insbesondere ist dazu erfindungsgemäß vorgesehen, daß zumindest die äußere Oberfläche des Ankers 19' aus einem von dem zu dosierenden Wasch- oder Reinigungsmittel nicht angreifbaren Werkstoff, insbesondere aus einem Kunststoffmaterial, besteht.

Figur 7 zeigt in einer schematischen Darstellung eine Querschnittsansicht durch einen als bistabilen Hubmagneten ausgebildeten Aktuator 18. Man erkennt eine erste Spule 58 und eine zweite Spule 59 mit einem zwischen den Spulen 58, 59 angeordneten Permanentmag-neten 57. In den kreisringförmigen Spulen 58, 59 sowie dem kreisringförmigen Permanent-magneten 57 ist das Verschlußelement 19 als Tauchkern aufgenommen. Durch magnetischen Rückschluß zwischen dem Magnetfeld des Permanentmagneten 57 und dem magnetisierbaren Verschlußelement 19 wird eine Haltekraft erzeugt, wodurch das Verschlußelement 19 in einer Position fixierbar ist, welche jeweils durch die Haltepunkte 60, 61 definiert ist.

Das Verschlußelement 19 kann durch eine impulsartige Bestromung der Spulen 58, 59 zu den Haltepunkten 60 und 61 bewegt werden, indem dem Magnetfeld des Permanentmagneten 57 ein elektrisch erzeugtes Magnetfeld jeweils einer der Spulen 58, 59 mit einer entsprechenden Polarisation überlagert wird. Wird beispielsweise die Spule 58 bestromt, so wird ein Abriß des magnetischen Rückschlusses zwischen dem Permanentmagneten 57 und dem Verschlußelement 19 bewirkt, so daß nachfolgend das Verschlußelement 19 in das Magnetfeld der Spule 58 vom Haltepunkt 60 zum Haltepunkt 61 bewegt wird, was aus der unteren Abbildung der Figur 7 hervorgeht. Wird eine entsprechende impulsartige Bestromung der Spule 59 bewirkt, so bewegt sich das Verschlußelement 19 vom Haltepunkt 61 zurück in die Aus-gangsstellung von Haltepunkt 60.

Das weitere, in Figur 8 dargestellte und bevorzugte Ausführungsbeispiel zeigt eine etwas andere Konstruktion, bei der vorgesehen ist, daß im Anker 19' an seinen axialen Enden Permanentmagnete 57', 57" axial antipolig angeordnet sind und daß im äußeren Aufnahmeraum 18' an beiden axialen Enden Jochringe 57'" aus einem ferromagnetischen Material, insbesondere aus Eisen, und zwischen diesen eine Spulenwicklung 58 angeordnet sind. Die Permanentmagnete 57', 57" sind axial antipolig angeordnet. Im dargestellten Ausführungsbeispiel ist jeweils der Nordpol axial außen, der Südpol innen positioniert. Die Anordnung kann auch genau umgekehrt sein. Hat der Anker 19' eine seiner Endpositionen, beispielsweise die in Fig. 31a dargestellte Durchlaßstellung, erreicht, so ist diese Stellung des Aktuators 18 in sich stabil, ohne daß die Spulenwicklung 58 bestromt wird. Batterieschonend erfolgt eine Bestromung der Spulenwicklung 58 nur dann, wenn ein Umschaltvorgang erfolgen soll. Das erhöht die Lebensdauer der Energiequelle 15 ganz beträchtlich.

Der insgesamt in Kunststoff ausgeführte Anker 19', in dem die Permanentmagnete 57', 57" eingebettet sind, ist gegenüber den üblichen Wasch- und Reinigungsmitteln dauerhaft beständig.

Die Spulenwicklung 58 und die Jochringe 57'" befinden sich im äußeren Aufnahmeraum 18' und sind daher im trockenen Bereich angeordnet.

Wird die Spulenwicklung 58 mit der richtigen Stromflußrichtung bestromt, so erfolgt ein Umschalten des Aktuators 18, nämlich ein impulsartiges Verlagern des Ankers 19' in seine andere Endposition (Haltepunkt 60 oben, Haltepunkt 61 unten in Figur 8).

Anders als in Figur 8 dargestellt kann man auch die Permanentmagnete 57 außen mit der Spulenwicklung 58 zusammen anordnen und dann die Jochringe 57"' oder andere Jochbau-teile am Anker 19' im Kunststoffmaterial eingebettet positionieren. Wesentlich ist, daß der magnetische Kreis jeweils geschlossen ist.

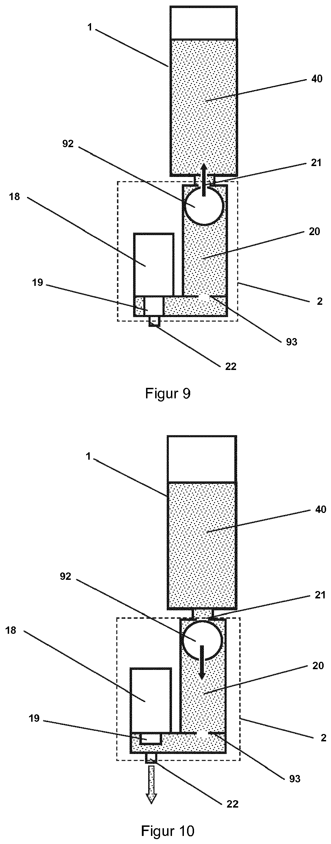

Nachfolgend wird die Funktionsweise der Dosierkammer 20 anhand der Figuren 9-12 näher erläutert. Figur 9 zeigt das Dosiergerät 2 im gekoppelten Zustand mit der Kartusche 40. Die Zubereitung 40 kann über den Dosierkammereinlass 21 aus der Kartusche 1 in die Dosierkammer 20 einströmen. Die Dosierkammer 20 ist im Querschnitt L-förmig ausgebildet, wobei oberhalb des kurzen Schenkels der L-förmigen Dosierkammer 20 der als bi-stabiles Magnetventil ausgebildete Aktuator 18 positioniert ist. Das Verschlusselement 19 verschließt in der Verschlussstellung des Dosiergeräts 2 den Dosierkammerauslass 22. Die L-förmige Dosierkammer 20 ist durch die Blende 93 in zwei Abschnitte unterteilt, wobei - wie aus den Figuren 9-12 gut ersichtlich - der untere Abschnitt im Wesentlichen einen horizontalen Verlauf, und der obere Abschnitt einen im Wesentlichen vertikalen Verlauf aufweist. Innerhalb des oberen, vertikalen Abschnitts der Dosierkammer 20, also in Schwerkraftrichtung oberhalb der Blende 93, ist der Schwimmkörper 92 angeordnet, dessen Dichte geringer ist, als die Dichter der Zubereitung 40, mit der die Dosierkammer 20 gefüllt ist, wodurch der Schwimmkörper 92 eine Auftriebskraft entgegen der Schwerkraftrichtung erfährt, was durch den Pfeil in Figur 9 angedeutet ist.

Der Schwimmerkörper 92 ist nicht als Verschlussorgan ausgebildet, sondern als eine gezielte Drossel, die beim Öffnen des Verschlusselements 19 den Schlupf zwischen Dosierkammereinlass 21 und Dosierkammerauslass 22 minimiert und damit die Dosiergenauigkeit bestimmt. Der Schwimmkörper ist derart konfiguriert, dass er in seinen Endlagen am Dosierkammereinlass 21 und Blende 93 nicht dichtig auf- bzw. anliegt, sondern auch in den Endlagen eine Um und/oder Durchströmung des Schwimmkörpers 92 ermöglicht ist.

Der Schwimmkörper 92 und die Dosierkammer 20 sind in der Art ausgebildet, dass Zubereitung 40 den Schwimmkörper 92 in der Dosierkammer 20 um- und/oder durchströmen kann.

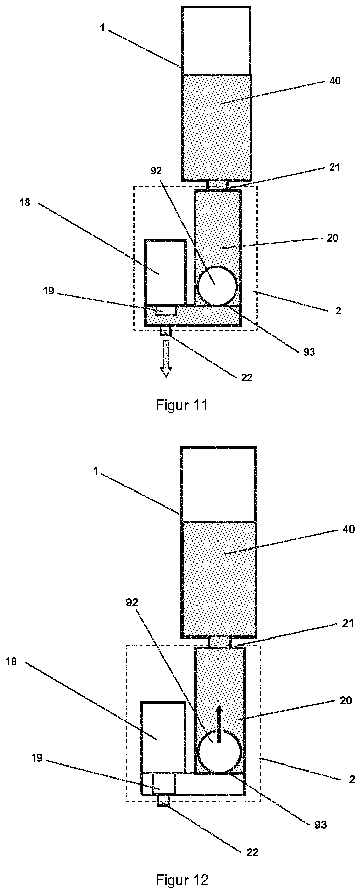

Wird nun das Verschlusselement 19 durch den Aktuator 18 in eine Abgabeposition gebracht (Figur 10), so dass der Dosierkammerauslass 22 geöffnet ist und Zubereitung 40 in die Umgebung abgegeben wird, was durch den Pfeil angedeutet ist, bewegt sich der Schwimmkörper 92 mit der aus der Dosierkammer 20 ausfließenden Zubereitung 40 in Flussrichtung der Zubereitung 40 in Richtung Blende 93, bis der Schwimmkörper 92 schließlich auf der Blende 93 aufliegt, was in Figur 11 gezeigt ist.

Wird, wie in Figur 12 gezeigt, das Verschlusselement 19 durch den Aktuator 18 wieder in seine Verschlussstellung bewegt und der Fluidstrom der Zubereitung in Richtung des Dosierkammerauslasses 22 kommt zum Stillstand, bewegt sich der Schwimmkörper 92 aufgrund seines Auftriebs in der Zubereitung 40 entgegen der Schwerkraftrichtung in der Dosierkammer 20 in Richtung des Dosierkammereinlasses 21 bis die in Figur 9 gezeigte Ausgangsposition erneut erreicht ist.

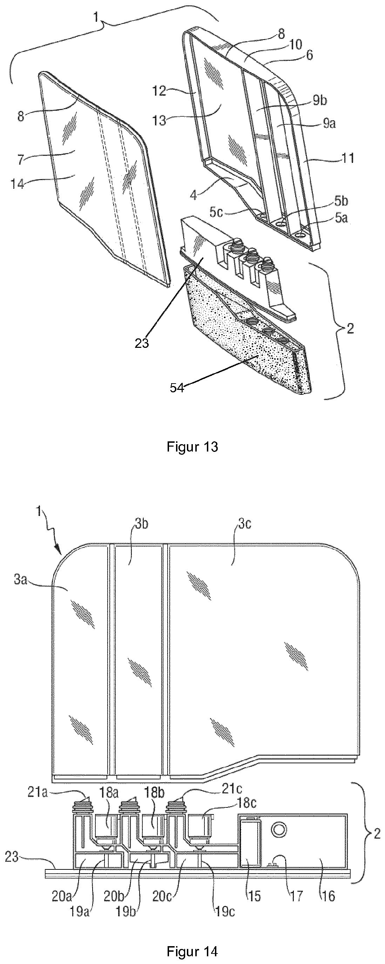

Figur 13 zeigt in einer Explosionsdarstellung die wesentlichen Bauelemente des Dosiersystems bestehend aus Kartusche 1 und Dosiergerät 2.

Wie der Figur 13 zu entnehmen ist, ist die Kartusche 1 aus zwei Kartuschenelementen 6,7 zusammengesetzt. Das Dosiergerät 2 besteht im Wesentlichen aus einem Bauelementträger 23 und einer Konsole 54, in die der Bauelementträger 23 einsetzbar ist. Die Konsole 54 umschließt im zusammengefügten Zustand den Bauelementträger 23 bevorzugt in der Art, dass ein Eindringen von Wasser in den Bauelementträger 23 verhindert ist.

Figur 14 zeigt eine Seitenansicht auf eine Ausführungsform des Bauelementträgers 23 des Dosiergeräts 2, der nachfolgend näher erläutert wird.

An dem Bauelementträger 23 sind die Dosierkammer 20, der Aktuator 18 und das Verschlusselement 19 sowie die Energiequelle 15, die Steuereinheit 16 und die Sensoreinheit 17 angeordnet. Die Dosierkammer 20, die Vordosierkammer 26, der Dosierkammereinlass 21 sowie die Aufnahme 29 sind einstückig mit dem Bauelementträger 23 ausgebildet.

Wie der Figur 14 weiter zu entnehmen ist, sind die Energiequelle 15, die Steuereinheit 16 und die Sensoreinheit 17 in einer Baugruppe zusammengefasst, indem sie auf einer entsprechenden Platine angeordnet sind.

Die Vordosierkammer 26 und der Aktuator 18 sind, wie in Figur 14 gezeigt, auf dem Bauelementträger 23 im Wesentlichen nebeneinander angeordnet. Die Vordosierkammer 26 weist eine L-förmige Grundform mit einer Schulter im unteren Bereich auf, in der die Aufnahme 29 für den Aktuator 18 eingelassen ist. Unterhalb der Vordosierkammer 26 und des Aktuators 18 ist die Auslasskammer 27 angeordnet. Die Vordosierkammer 26 und die Auslasskammer 27 bilden gemeinsam die Dosierkammer 20 aus.

Die Vordosierkammer 26 und die Auslasskammer 27 sind durch die Öffnung 34 miteinander verbunden. Die Aufnahme 29, die Öffnung 34 sowie der Dosierkammerauslass 22 liegen auf einer senkrecht zur Längsachse des Bauelementträgers 23 liegenden Flucht, so dass das stabförmge Verschlusselement 19 durch die Öffnungen 22,29,34 hindurch geführt werden kann.

Wie insbesondere aus der Figur 14 ersichtlich, sind die Rückwände der Vordosierkammer 26 und die Auslasskammer 27 integral mit dem Bauelementträger 23 ausgeformt. Die Vorderwand kann dann beispielsweise durch ein Deckelement oder eine Folie (nicht abgebildet) stoffschlüssig mit der Dosierkammer 20 verbunden werden.

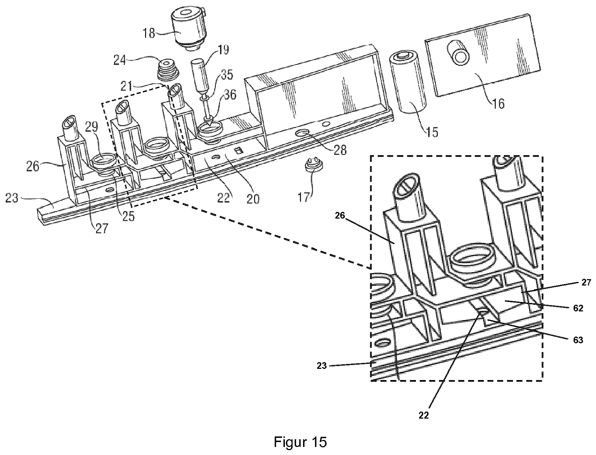

Im Folgenden wird die Ausgestaltung der Dosierkammer 20 anhand der Detailansicht der Figur 15 näher erläutert. Man erkennt die Auslasskammer 27, welche über einen Boden 62 verfügt. Der Boden 62 ist hin zur mittig in der Auslasskammer 27 angeordneten Dosierkammerauslass 22 trichterartig geneigt. Der Dosierkammerauslass 22 befindet sich in einem Kanal 63, der rechtwinklig zur Längsachse des Bauelementträgers 23 in der Auslasskammer 27 verläuft. Der trichterartig ausgeformte Boden 62 sowie der Kanal 63 und die darin angeordnete Auslassöffnung 22 gewährleisten bei einer von der Horizontalen abweichenden Lage des Dosiergeräts eine Dosiersowie eine nahezu vollständige Restentleerbarkeit von Zubereitung aus der Dosierkammer 20. Ferner fließt die Zubereitung durch die entsprechend trichterförmige Bodengestaltung schneller, insbesondere bei höherviskosen Zubereitungen, aus der Dosierkammer aus, so dass das Dosierintervall, in dem Zubereitung freigesetzt wird, kurz gehalten werden kann.

In der Figur 15 ist lediglich die mittlere Dosierkammer 20 mit einer trichterförmigen Bodenausgestaltung der eingangs beschriebenen Art versehen. Es versteht sich, dass abweichend von dieser Darstellung auch andere, weitere oder alle Dosierkammern eine derartige Ausformung aufweisen können. Dies gilt auch für die Vordosierkammern 26 und Auslasskammern 27, soweit diese vorgesehen sind.

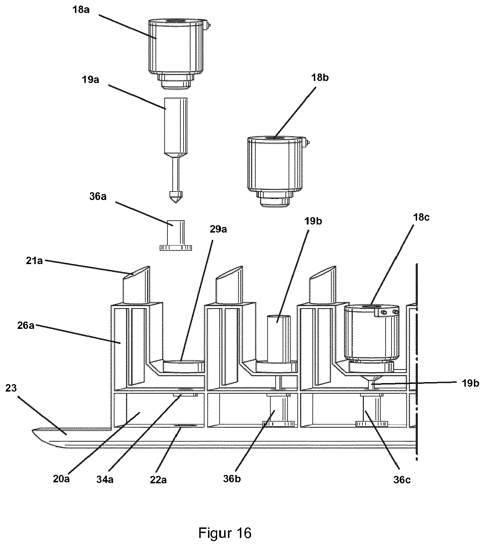

Anhand der Explosionsdarstellung in Figur 16 wird die Anordnung des Aktuators 18, des Verschlusselements 19 sowie der Dichtung 36 an dem Bauelementträger 23 näher erläutert. Die Abbildung zeigt einen Bauelementträger 23 mit drei nebeneinander angeordneten Dosierkammern 20. In der Dosierkammer ganz rechts ist der Aktuator 18c, das Verschlusselement 19c und die Dichtung 36c im zusammengebauten Zustand am Bauelementträger 23 gezeigt. Bei der mittleren Dosierkammer ist die Dichtung 36b sowie das Verschlusselement 19b im zusammengefügten Zustand in der Dosierkammer gezeigt, während der Aktuator 18b vom Verschlusselement 19b gelöst ist. Über der linken Dosierkammer 20a ist sowohl die Dichtung 36a, das Verschlusselement 19a als auch der Aktuator 18a in einer Explosionsdarstellung abgebildet.

Integral mit dem Bauelementträger 23 ist die Dosierkammer 20, die Vordosierkammer 26, der Dosierkammereinlass 21 sowie die Aufnahme 29 für den Aktuator 18 ausgebildet. Die Vordosierkammer 26 ist L-förmig oberhalb der Dosierkammer 20 angeordnet, wobei an dem parallel zum Boden des Bauelementträgers 23 verlaufenden Schenkel der Vordosierkammer, die Aufnahme für den Aktuator 18 angeordnet ist. Die Dosierkammer 20 und die Vordosierkammer 26 sind durch die Öffnung 34 miteinander verbunden. Die Aufnahme 29, die Öffnung 34 und der Dosierkammerauslass 22 liegen auf einer Achse, welche senkrecht zur Längsachse des Bauelementträgers 23 verläuft.

Die Dichtung 36 hat eine im Wesentlichen hohlzylinder-artige Raumgestalt mit einem durch ein tellerartiges Endstück verschlossenen Kopf. Die elastische Dichtung 36 lässt sich in derart in der Dosierkammer 20 anordnen, dass das tellerartige Endstück innenseitig gegen den Dosierkammerauslass 22 und mit der dem tellerartigen Endstück abgewandten Seite der Dichtung 36 gegen die Öffnung 34 drückt. Das zylinderförmige Verschlusselement 19 ist mit seinem ersten Ende derart ausgebildet, dass es in die hohlzylinder-förmige Dichtung 36 eingreift und dort stoff-, kraft- und/oder formschlüssig fixierbar ist. Das Verschlusselement 19 ist dabei in derart dimensioniert, dass es durch die Öffnung 34 und die Öffnung der Aufnahme 29 hindurchgeführt werden kann, jedoch am Dosierkammerauslass 22 anschlägt, so dass das Verschlusselement 19 nicht nach unten hin aus dem Bauelementträger 23 herausrutschen kann.

Das Verschlusselement 19 ragt mit einem Ende aus der Aufnahme 29 heraus. Dieses Ende wird in den als bistabilen Elektromagneten ausgeführten Aktuator 18 gesteckt und fungiert als Anker.

## Patentansprüche

1. Dosiergerät eines Dosiersystems mit einer Kartusche für fließfähige Wasch- oder Reinigungsmittel mit einer Mehrzahl von Kammern (3a, 3b, 3c) zur räumlich separierten Aufnahme jeweils voneinander verschiedener Zubereitungen eines Wasch- oder Reinigungsmittels und mit einem mit der Kartusche (1) kuppelbaren Dosiergerät, wobei das Dosiergerät (2) aufweist:
eine Energiequelle (15),
eine Steuereinheit (16),
eine Sensoreinheit (17),
wenigstens eine Dosierkammer (20), die bei mit einer Kartusche (1) zusammengesetztem Dosiergerät (2) mit mindestens einer der Kartuschenkammern (3a, 3b, 3c) der Kartusche (1) kommunizierend verbunden ist,
wobei die Dosierkammer (20) einen Einlaß (21) für das Einströmen von Wasch- oder Reinigungsmittel aus einer Kartuschenkammer (3a, 3b, 3c) und einen Auslaß (22) für das Ausströmen von Wasch- oder Reinigungsmittel aus der Dosierkammer (20) in die Umgebung aufweist
**gekennzeichnet durch**
eine Aktuator-/Verschlußelement-Kombination mit einen Aktuator (18) und ein Verschlußelement (19), wobei der Aktuator (18) so mit der Energiequelle (15) und der Steuereinheit (16) verbunden ist, daß ein Steuersignal der Steuereinheit (16) eine Betätigung des Aktuators (18) bewirkt, wobei das Verschlußelement (19) mit dem Aktuator (18) in der Art gekoppelt ist, daß das Verschlußelement (19) vom Aktuator (18) in eine Verschlußstellung und in eine Durchlaßstellung (Abgabestellung) versetzbar ist,
wobei zumindest der Auslaß (22) der Dosierkammer (20) durch das Verschlußelement (19) verschließbar oder freigebbar ist,
wobei das Verschlußelement (19) als Auf-/Zu-Ventilelement ausgebildet ist, und wobei der Aktuator (18) derart ausgebildet ist, daß er durch einen passenden Impuls angesteuert wahlweise bestimmbar eine von zwei Endstellungen einnimmt und ohne Ansteuerung die erreichte Endstellung stabil beibehält, und
daß somit die Aktuator-/Verschlußelement-Kombination ein impulsgesteuertes, bistabiles Auf-/Zu-Ventil bildet.

2. Dosiergerät nach Anspruch 1, **dadurch gekennzeichnet,**
**daß** das Dosiergerät (2) einen Bauelementträger (23) aufweist und daß in Gebrauchsstellung des Dosiergeräts (2) eine Aufnahme für den Aktuator (18) am Bauelementträger (23) in Schwerkraftrichtung oberhalb der Dosierkammer (20) angeordnet ist.

3. Dosiergerät nach Anspruch 2, **dadurch gekennzeichnet,**
**daß** in Gebrauchsstellung des Dosiergeräts (2) der Einlaß (21) der Dosierkammer (20) am Bauelementträger (23) oberhalb der Aufnahme des Aktuators (18) angeordnet ist.

4. Dosiergerät nach Anspruch 1, **dadurch gekennzeichnet,**
**daß** das Dosiergerät (2) einen Bauelementträger (23) aufweist und daß in Gebrauchsstellung des Dosiergeräts (2) eine Aufnahme für den Aktuator (18) am Bauelementträger (23) seitlich neben der Dosierkammer (20) angeordnet ist.

5. Dosiergerät nach einem der Ansprüche 2 bis 4, **dadurch gekennzeichnet,**
**daß** die Aufnahme für den Aktuator (18) eine Öffnung aufweist, die auf einer Linie mit dem Auslaß (22) der Dosierkammer (20) liegt, und daß das Verschlußelement (19) vom Aktuator (18) durch die Öffnung zum Auslaß (22) hin und her bewegbar ist.

6. [S.14 Absatz 3] Dosiergerät nach einem der vorigen Ansprüche, **dadurch gekennzeichnet,**
**daß** der Aktuator (18) als ein bistabiles Solenoid mit einem einen Anker (19') aufnehmenden Raum (19") und einem diesen umgebenden äußeren Aufnahmeraum (18') ausgeführt ist.

7. Dosiergerät nach Anspruch 6, **dadurch gekennzeichnet,**
**daß** der den Anker (19') aufnehmende Raum (19") des Aktuators (18) von dem äußeren Aufnahmeraum (18') des Aktuators (18) flüssigkeitsdicht und vorzugsweise auch gas dicht getrennt ist.

8. Dosiergerät nach mindestens einem der Ansprüche 6 oder 7, **dadurch gekennzeichnet,**
**daß** zumindest die äußere Oberfläche des Ankers (19') aus einem von dem zu dosierenden Wasch- oder Reinigungsmittel nicht angreifbaren Werkstoff, insbesondere aus einem Kunststoffmaterial, besteht.

## Claims

1. A dosing device of a dosing system comprising a cartridge for flowable washing or cleaning agents, which cartridge has a plurality of chambers (3a, 3b, 3c) for receiving preparations of a washing or cleaning agent in separate spaces, which preparations are different from one another, and comprising a dosing device that can be coupled to the cartridge (1), the dosing device (2) comprising:
an energy source (15),
a control unit (16),
a sensor unit (17),
at least one dosing chamber (20) which, when the dosing device (2) is combined with a cartridge (1), is connected so as to be in communication with at least one of the cartridge chambers (3a, 3b, 3c) of the cartridge (1),
the dosing chamber (20) comprising an inlet (21) for the inflow of washing or cleaning agent from a cartridge chamber (3a, 3b, 3c) and an outlet (22) for the outflow of washing or cleaning agent from the dosing chamber (20) into the environment
**characterized by**
an actuator/closing element combination comprising an actuator (18) and a closing element (19), the actuator (18) being connected to the energy source (15) and to the control unit (16) such that a control signal from the control unit (16) effects an actuation of the actuator (18), the closing element (19) being coupled to the actuator (18) in such a way that the closing element (19) can be moved by the actuator (18) into a closed position and into a passage position (dispensing position),
it being possible for at least the outlet (22) of the dosing chamber (20) to be closed or unblocked by the closing element (19),
the closing element (19) being designed as an open/close valve element and the actuator (18) being designed in such a way that, when actuated by an appropriate pulse, it occupies one of two final positions in an optionally specifiable manner, and, without actuation, maintains the achieved final position in a stable manner, and
such that the actuator/closing element combination therefore forms a bistable open/close valve that is actuated by pulses.

2. The dosing device according to claim 1, **characterized in that** the dosing device (2) comprises a component support (23) and **in that**, in the use position of the dosing device (2), a receiving space for the actuator (18) is arranged on the component support (23) above the dosing chamber (20) in the direction of gravity.

3. The dosing device according to claim 2, **characterized in that** in the use position of the dosing device (2), the inlet (21) of the dosing chamber (20) is arranged on the component support (23) above the receiving space for the actuator (18).

4. The dosing device according to claim 1, **characterized in that** the dosing device (2) comprises a component support (23) and **in that**, in the use position of the dosing device (2), a receiving space for the actuator (18) is arranged on the component support (23) so as to be laterally adjacent to the dosing chamber (20).

5. The dosing device according to one of claims 2 to 4, **characterized in that** the receiving space for the actuator (18) comprises an opening that is in line with the outlet (22) of the dosing chamber (20), and **in that** the closing element (19) can be moved by the actuator (18) through the opening back and forth with respect to the outlet (22).

6. The dosing device according to one of the preceding claims, **characterized in that** the actuator (18) is designed as a bistable solenoid comprising a space (19") that receives an armature (19') and an outer receiving space (18') that surrounds said space.

7. The dosing device according to claim 6, **characterized in that** the space (19") of the actuator (18), which space receives the armature (19'), is separated from the outer receiving space (18') of the actuator (18) in a liquid-tight manner and preferably also in a gas-tight manner.

8. The dosing device according to at least one of claims 6 or 7, **characterized in that** at least the outer surface of the armature (19') consists of a material that is impenetrable to the washing or cleaning agent to be dosed, in particular a plastics material.

## Revendications

1. Dispositif de dosage d'un système de dosage comportant une cartouche pour des lessives ou détergents à écoulement libre, comprenant une pluralité de chambres (3a, 3b, 3c) pour la réception spatialement séparée de préparations différentes les unes des autres d'une lessive ou d'un détergent, et un appareil de dosage pouvant être couplé à la cartouche (1), l'appareil de dosage (2) présentant :
une source d'énergie (15),
une unité de commande (16),
une unité de détection (17),
au moins une chambre de dosage (20), connectée en communication avec au moins une des chambres de cartouche (3a, 3b, 3c) de la cartouche (1) lorsque l'appareil de dosage (2) est assemblé avec une cartouche (1),
la chambre de dosage (20) comportant un orifice d'entrée (21) pour l'entrée de lessive ou de détergent depuis une chambre de cartouche (3a, 3b, 3c), et un orifice de sortie (22) pour l'écoulement de lessive ou de détergent hors de la chambre de dosage (20), vers l'extérieur
**caractérisé par**
une combinaison d'actionneur/d'élément de fermeture comportant un actionneur (18) et un élément de fermeture (19), l'actionneur (18) étant connecté à la source d'énergie (15) et à l'unité de commande (16) de telle manière qu'un signal de commande de l'unité de commande (16) produit un mouvement de l'actionneur (18), l'élément de fermeture (19) étant couplé à l'actionneur (18) de telle manière que l'actionneur (18) peut amener l'élément de fermeture (19) dans une position de fermeture ou dans une position d'ouverture (de distribution),
au moins l'orifice de sortie (22) de la chambre de dosage (20) pouvant être fermé ou libéré par l'élément de fermeture (19),
l'élément de fermeture (19) étant réalisé sous la forme d'un élément de type soupape d'ouverture/de fermeture, et l'actionneur (18) étant réalisé de manière à occuper une des deux positions finales de manière sélectivement déterminable par le biais d'une commande par impulsion adaptée et à rester de manière stable dans la position finale atteinte en l'absence de commande, et
de manière à ce que la combinaison d'actionneur/d'élément de fermeture forme ainsi une soupape d'ouverture/de fermeture bistable commandée par impulsion.

2. Appareil de dosage selon la revendication 1, **caractérisé en ce que** l'appareil de dosage (2) comporte un support de composant (23) et **en ce que**, dans la position d'utilisation de l'appareil de dosage (2), un logement pour l'actionneur (18) est disposé sur le support de composant (23) au-dessus de la chambre de dosage (20) dans le sens de la gravité.

3. Appareil de dosage selon la revendication 2, **caractérisé en ce que**, dans la position d'utilisation de l'appareil de dosage (2), l'orifice d'entrée (21) de la chambre de dosage (20) est disposé sur le support de composant (23) au-dessus du logement de l'actionneur (18).

4. Appareil de dosage selon la revendication 1, **caractérisé en ce que** l'appareil de dosage (2) comporte un support de composant (23) et **en ce que**, dans la position d'utilisation de l'appareil de dosage (2), un logement pour l'actionneur (18) est disposé sur le support de composant (23) latéralement à côté de la chambre de dosage (20).

5. Appareil de dosage selon l'une des revendications 2 à 4, **caractérisé en ce que** le logement de l'actionneur (18) présente une ouverture alignée avec l'orifice de sortie (22) de la chambre de dosage (20) et **en ce que** l'actionneur (18) peut faire aller et venir l'élément de fermeture (19) jusqu'à l'orifice de sortie (22) via l'ouverture.

6. Appareil de dosage selon l'une des revendications précédentes, **caractérisé en ce que** l'actionneur (18) est réalisé sous la forme d'un solénoïde bistable pourvu d'un espace (19") dans lequel est logé un induit (19') et d'un espace de réception extérieur (18') entourant ledit espace.

7. Appareil de dosage selon la revendication 6, **caractérisé en ce que** l'espace (19") de l'actionneur (18), dans lequel est logé l'induit (19'), est séparé de l'espace de réception extérieur (18') de l'actionneur (18) de manière étanche aux liquides et de préférence également de manière étanche aux gaz.

8. Appareil de dosage selon au moins une des revendications 6 ou 7, **caractérisé en ce qu'**au moins la surface extérieure de l'induit (19') est constituée d'une matière non corrodable par la lessive ou le détergent à doser, en particulier de matière plastique.
